(19) Europäisches Patentamt
European Patent Office
Office européen des brevets

(11) EP 2 423 286 A1

(12) **EUROPEAN PATENT APPLICATION**
published in accordance with Art. 153(4) EPC

(43) Date of publication:
**29.02.2012 Bulletin 2012/09**

(21) Application number: **10767000.2**

(22) Date of filing: **15.04.2010**

(51) Int Cl.:
***C09J 7/02*** *(2006.01)* ***C09J 4/02*** *(2006.01)*
***C09J 11/00*** *(2006.01)* ***C09J 133/00*** *(2006.01)*

(86) International application number:
**PCT/JP2010/056756**

(87) International publication number:
**WO 2010/122943 (28.10.2010 Gazette 2010/43)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.04.2009 JP 2009102688**
**21.04.2009 JP 2009102698**

(71) Applicant: **Nitto Denko Corporation**
**Ibaraki-shi**
**Osaka 567-8680 (JP)**

(72) Inventors:
- **HIGUCHI, Naoaki**
**Ibaraki-shi**
**Osaka 567-8680 (JP)**
- **TOKUNAGA, Yasuyuki**
**Ibaraki-shi**
**Osaka 567-8680 (JP)**
- **NAKASHIMA, Tooru**
**Ibaraki-shi**
**Osaka 567-8680 (JP)**
- **YAMANAKA, Eiji**
**Ibaraki-shi**
**Osaka 567-8680 (JP)**

(74) Representative: **Grünecker, Kinkeldey, Stockmair & Schwanhäusser**
**Anwaltssozietät**
**Leopoldstrasse 4**
**80802 München (DE)**

# (54) HEAT-EXPANSIVE AND REPEELABLE ACRYLIC PRESSURE-SENSITIVE ADHESIVE TAPE OR SHEET

(57) Provided is a heat-expandable removable acrylic pressure-sensitive adhesive tape that has high normal-state adhesive power when bonded independently of whether the adherend has or does not have irregular surface and permits easy separation when the bonded region is separated and disassembled by lowering the adhesive power by heating, that permits easily separation-decomposition, even after long-term storage at high temperature.

The heat-expandable removable acrylic pressure-sensitive adhesive tape or sheet according to the present invention includes at least a heat expanding agent-containing pressure-sensitive adhesive layer, and the tape or sheet has an initial 90°peel adhesive strength to a polycarbonate plate as adherend of 10 N/25 mm or more and a 90°peel adhesive strength after storage in an atmosphere at 80°C for 2 months as bonded to the polycarbonate adherend and after heat expansion treatment of less than 10 N/25 mm.

EP 2 423 286 A1

## Description

[Technical Field]

The present invention relates to a heat-expandable removable acrylic pressure-sensitive adhesive tape or sheet that has high normal-state adhesive power when bonded independently of whether the adherend has or does not have irregular surface and yet has lowered adhesive power when removed under heat. More specifically, it relates to a heat-expandable removable acrylic pressure-sensitive adhesive tape or sheet that has high adhesive properties when bonded, independently of whether the adherend has or does not have irregular surface and yet has decreased adhesive power and is thus easily separated by heating, after use when disassembled for example for recycling or reworking, and heat-expandable removable acrylic pressure-sensitive adhesive tape or sheet that has favorable adhesive properties when bonded and yet is easily separated under heat when separated for example for reworking or recycling.

[Background Art]

Acrylic expandable material-like adhesive tapes (acrylic pressure-sensitive adhesive tapes containing microparticles in base material and/or pressure-sensitive adhesive layer) have been used frequently in applications demanding adhesive strength (high adhesiveness), shear adhesive strength, high holding efficiency, level difference-absorbing efficiency (roughened-surface adhesiveness), stress relaxation property, shock-absorbing property, long-term reliability and others at room temperature, for connection of parts in various fields such as automobiles, mechanical parts, electric appliances and construction materials.

Recently, increase in environmental consciousness led to increased demand for energy conservation and recycling. Under the circumstance above, although conventional expandable material-like acrylic adhesive tapes have higher bonding reliability because of their high adhesive strength (high bonding strength), the high bonding strength thereof made it difficult to separate or part the bonding area. For example, they are used in the following typical applications.

Recently, a decoration panel printed for example in black is bonded to the front face of flat televisions for improvement in appearance. Expandable material-like acrylic adhesive tapes have been used for fixing the decoration panel because high adhesion, high holding efficiency, high level difference-absorbing efficiency, and high stress relaxation property are required, but the expandable material-like acrylic adhesive tapes had a problem of difficulty in separation in material recycling after use because they are highly adhesive.

Expandable material-like acrylic adhesive tapes have been used for fixing a display plate demanding high adhesiveness, long-term reliability and roughened-surface adhesiveness (level difference-absorbing efficiency). Such a display plate is normally separated for example from a pole or a board after use, but the expandable material-like acrylic adhesive tape is highly adhesive, and thus, the display plate may be broken or the pole or board, to which the display plate is bonded, may be broken in some cases.

The expandable material-like acrylic adhesive tapes have been used in applications fixing a LCD module or a backlight unit that demand high adhesiveness, level difference-absorbing efficiency, shock-absorbing efficiency and others. However, they had a problem that it was not possible to separate the adhesive tape because of its high adhesiveness or to recycle the parts, to which the adhesive tape was bonded, because of their breakdown even if the adhesive tape is separable, in operation for rework due to defective bonding of the tape during production or in operation for repair when there is a defect found in tests after bonding.

The expandable material-like acrylic adhesive tapes of Patent Documents 1 to 7 have been known as the expandable material-like acrylic adhesive tapes, but it was difficult for the adhesive tapes to show both favorable normal-state adhesive power to irregular-surfaced adherend (adhesive power at 23°C and 50% RH (normal state)) and easy releasability (removability) at the same time.

The base polymer for the acrylic adhesives has been produced by solution polymerization of acrylic monomers containing an alkyl (meth)acrylate ester as the principal component in organic solvent. Recently, to satisfy requirements by air pollution and environmental problems from the concern about global environment, it is particularly advantageous to produce an adhesive tape or sheet (hereinafter, the "tape or sheet" may be referred simply "tape" or "sheet") having a pressure-sensitive adhesive layer formed without any solvent by ultraviolet polymerization of acrylic monomers from the points of safety and environment.

In addition, if the adherend is made of a metal such as SUS (stainless steel), it was difficult to obtain favorable easy releasability with an acrylic pressure-sensitive adhesive tape containing an acrylic acid component, because the adhesive power increases by heating although the adhesive tape may show high adhesion property under normal state (high normal-state adhesive power). It also had a problem of corrosion of the adherend by the acidic components added.

[Citation List]

[Patent Literature]

Patent Document 1: Japanese Examined Patent Publication No. 57-17030 (U.S. Patent No. 4223067)
Patent Document 2: Japanese Unexamined Patent Publication No. 7-48549
Patent Document 3: Japanese Unexamined Patent Publication No. 2001-212900
Patent Document 4: Japanese Unexamined Patent Publication No. 2002-088320
Patent Document 5: Japanese Unexamined Patent Publication No. 2002-003800
Patent Document 6: Japanese Unexamined Patent Publication No. 2002-121505
Patent Document 7: Japanese Unexamined Patent Publication No. 2004-018761

[Summary of Invention]

[Technical Problem]

After studies to solve the problems above, the inventors have earlier found that it was possible to obtain a removable pressure-sensitive adhesive tape that has high normal-state adhesive power when bonded independently of whether the adherend has or does not have irregular surface and permits easy separation when the bonded region is separated and disassembled by lowering the adhesive power by heating, from an adhesive tape or sheet having a base material and a pressure-sensitive adhesive layer formed at least on one face of the base material, in which the base material used is a bubble-containing base material, i.e., a bubble-bearing microparticle-ontaining viscoelastic material and a heat expanding agent-containing pressure-sensitive adhesive layer formed with a heat expanding agent-containing pressure-sensitive adhesive composition is laminated at least onto one face of the base material. However, according to the invention, the heat releasability of the adhesive tape often lowered after long-term storage at high temperature, demanding further improvement.

Thus, an object of the present invention is to provide a heat-expandable removable acrylic pressure-sensitive adhesive tape that has high normal-state adhesive power when bonded independently of whether the adherend has or does not have irregular surface and permits easy separation when the bonded region is separated and disassembled by lowering the adhesive power by heating, that permits easily separation-decomposition, even after long-term storage at high temperature.

[Solution to Problem]

After intensive studies to solve the problem above, the inventors have found that, if available is a heat-expandable removable acrylic pressure-sensitive adhesive tape or sheet including a heat expanding agent-containing pressure-sensitive adhesive layer, and having an initial 90°peel adhesive strength thereof to a polycarbonate plate as adherend of 10 N/25 mm or more and a 90°peel adhesive strength thereof after storage in an atmosphere at 80°C for 2 months as bonded to the polycarbonate adherend and after heat expansion treatment of less than 10 N/25 mm, it is possible to separate or disassemble the adhesive tape or sheet easily even after long-term storage at high temperature, and made the present invention.

Specifically, the present invention provide a heat-expandable removable acrylic pressure-sensitive adhesive tape or sheet including at least a heat expanding agent-containing pxessure-sensitive adhesive layer, and having an initial 90°peel adhesive strength to a polycarbonate plate as adherend of 10 N/25 mm or more and a 90°peel adhesive strength after storage in an atmosphere at 80°C for 2 months as bonded to the polycarbonate adherend and after heat expansion treatment of less than 10 N/25 mm.

In the heat-expandable removable acrylic pressure-sensitive adhesive tape or sheet, a heat-expansion rate of the heat expanding agent-containing pressure-sensitive adhesive layer after storage in an atmosphere at 80°C for 1 month is preferably 3 or more.

The heat-expandable removable acrylic pressure-sensitive adhesive tape or sheet preferably includes a bubble-bearing micioparticle-containing viscoelastic material and the heat expanding agent-containing pressure-sensitive adhesive layer at least on or above one face of the bubble-bearing microparticle-containing viscoelastic material.

[Advantageous Effects of Invention]

The heat-expandable removable acrylic pressure-sensitive adhesive tape or sheet according to the present

invention in the configuration above can be separated or disassembled easily, particularly even after long-term storage at high temperature. In addition, it shows high normal-state adhesive power independently of whether the adherend has or does not have irregular surface when bonded, and yet can be separated or disassembled easily when the bonded area is separated or parted, because of decrease of the adhesive power by heating.

[Brief Description of Drawings]

Figure 1 is a schematic sectional view illustrating an example of the preparation step for the heat-expandable removable acrylic pressure-sensitive adhesive tape according to the present invention.
Figure 2 is a schematic sectional view illustrating another example of the preparation step for the heat-expandable removable acrylic pressure-sensitive adhesive tape according to the present invention.
Figure 3 is a schematic sectional view illustrating yet another example of the preparation step for the heat-expandable removable acrylic pressure-sensitive adhesive tape according to the present invention.

[Description of Embodiments]

[Heat-expandable removable acrylic pressure-sensitive adhesive tape]

The heat-expandable removable acrylic pressure-sensitive adhesive tape or sheet according to the present invention (hereinafter, referred to simply as "heat-expandable removable acrylic pressure-sensitive adhesive tape according to the present invention") is a heat-expandable removable acrylic pressure-sensitive adhesive tape having at least a heat expanding agent-containing pressure-sensitive adhesive layer, **characterized in that** the initial 90°peel adhesive strength thereof to a polycarbonate plate as adherend is 10 N/25 mm or more, and the 90°peel adhesive strength thereof after storage in an atmosphere at 80°C for 2 months as bonded to the polycarbonate adherend and after heat expansion treatment is less than 10 N/25 mm. The heat-expandable removable acrylic pressure-sensitive adhesive tape preferably has a heat expanding agent-containing pressure-sensitive adhesive layer having a heat-expansion rate after storage in an atmosphere at 80°C for 1 month of 3 or more. In addition, the heat-expandable removable acrylic pressure-sensitive adhesive tape preferably has the heat expanding agent-containing pressure-sensitive adhesive layer on or above at least one face of a bubble-bearing microparticle-containing viscoelastic material. Since the heat-expandable removable acrylic pressure-sensitive adhesive tape according to the present invention has at least a heat expanding agent-containing pressure-sensitive adhesive layer, it is possible to lower the adhesive strength, when the heat expanding agent-containing pressure-sensitive adhesive layer is expanded by heating.
In the present invention, the initial 90°peel adhesive strength (initial adhesive power) can be determined in accordance with Testing method of pressuie-sensitive tapes and sheets of JIS Z 0237 (2000), by bonding a heat-expandable removable pressure-sensitive adhesive tape sample under pressure to an adherend polycarbonate plate in an atmosphere at 23°C under the condition of one reciprocation with a 5 kg roller, aging it at 23°C for 30 minutes, and separating the heat-expandable removable acrylic pressure-sensitive adhesive tape sample in the peeling direction at an angle of 90°at a tensile speed of 50 mm/min by using a tensile tester. When the initial 90°peel adhesive strength is 1.0 N/25 mm or more (e.g., 10 N/25 mm or more and 100 N/25 mm or less), the heat-expandable removable acrylic pressure-sensitive adhesive tape shows sufficient adhesive power to the adherend. The initial 90°peel adhesive strength of the heat-expandable removable acrylic pressure-sensitive adhesive tape according to the present invention is preferably 15 N/25 mm or more (e.g., 15 N/25 mm or more and 90 N/25 mm or less), more preferably 20 N/25 mm or more (e.g., 20 N/25 mm or more and 80 N/25 mm or less).
The initial adhesive power (90°peel adhesive strength) after heat expansion treatment of the heat-expandable removable acrylic pressure-sensitive adhesive tape can be determined by the method of determining the 90°peel adhesive strength described above, after a heat-expandable removable pressure-sensitive adhesive tape sample is bonded to an adherend polycarbonate plate under pressure in an atmosphere at 23°C under the condition of one reciprocation with a 5 kg roller and it is aged at 23°C for 30 minutes and treated for heat expansion. In the present invention, when the initial 90°peel adhesive strength after heat expansion treatment is less than 10 N/25 mm (e.g., 0 N/25 mm or more and less than 10 N/25 mm), the heat-expandable removable acrylic pressure-sensitive adhesive tape is easily removable from the adherend and can be separated or disassembled. The initial 90°peel adhesive strength after heat expansion treatment of the heat-expandable removable acrylic pressure-sensitive adhesive tape according to the present invention is preferably less than 9 N/25 mm (e.g., 0 N/25 mm or more and less than 9 N/25 mm), more preferably less than 8 N/ 25 mm (e.g., 0 N/25 mm or more and less than 8 N/25 mm).
Particularly, the present invention is **characterized in that** the 90°peel adhesive strength of the heat-expandable removable pressure-sensitive adhesive tape after storage in an atmosphere at 80°C, as the sample is bonded to a

polycarbonate adherend (polycarbonate plate), for 2 months and after heat expansion treatment is less than 10 N/25 mm. The 90°peel adhesive strength of the heat-expandable removable acrylic pressure-sensitive adhesive tape according to the present invention after storage in an atmosphere at 80°C for 2 months and after heat treatment is preferably less than 9 N/25 mm (e.g., 0 N/25 mm or more and less than 9 N/25 mm), more preferably less than 8 N/25 mm (e.g., 0 N/25 mm or more and less than 8 N/25 mm). Traditional heat-expandable removable acrylic pressure-sensitive adhesive tapes show favorable releasability by heat expansion initially, but the expandability declines after storage at high temperature for a long term, causing a problem of low separability. In contrast, the heat-expandable removable acrylic pressure-sensitive adhesive tape according to the present invention does not show decrease in expandability even after storage at high temperature for a long term and retains its favorable heat separability, and thus, even when bonded to an adherend for an extended period of time, it can be separated or disassembled rapidly by heat treatment (heat expansion treatment).

In the present invention, the heat treatment (heat expansion treatment) can be performed by a suitable heating means such as hot plate, hot air drier, near-infrared ray lamp or air drier. The heating temperature is not particularly limited if it is not lower than the expansion initiation temperature of the heat expanding agent, and can be set to a suitable value properly depending on the surface state of the adherend, the kinds of the heat expanding agent, the heat resistance of the adherend, the heating method (heat capacity, heating means, etc.), and the like. Under the general heat treatment condition, the heat-expandable removable acrylic pressure-sensitive adhesive tape is treated at a temperature of 100 to 250°C, preferably 110 to 200°C for a period of 5 to 90 seconds (e.g. by hot plate) or 5 to 15 minutes (e.g., by hot air drier). A temperature of more than 200°C has a significant influence on the adherend, possibly causing deformation of the adherend, if it is made of a resin. Normally, by heat treatment (heat expansion treatment) under such a heating condition, the heat expanding agent in the heat expanding agent-containing pressure-sensitive adhesive layer expands, leading to expansion and deformation and thus to irregular deformation of the heat expanding agent-containing pressure-sensitive adhesive layer and to decrease or loss of the adhesive power. Alternatively, an infrared rays lamp or heated water may be used as the heat source. The expansion initiation temperature of the heat expanding agent is a temperature at which the heat expanding agent starts to expand by softening of the shell substance and gasification of the inclusion substance (for example, hydrocarbon) and is determined, for example, by a thermal analysis method such as thermogravimetric measurement (TG) or differential thermal analysis (DTA).

Yet alternatively, a method of forming a heater such as a flexible heating sheet in the heat-expandable removable acrylic pressure-sensitive adhesive tape, applying voltage to the flexible heating sheet and heating the flexible heating sheet to the expansion temperature (expansion initiation temperature) or more may be used as the heating means.

The flexible heating sheet is not particularly limited, if it is a heat-generating element having a flat plate-shape (film- or sheet-shape) that generates heat by application of voltage. For example, a heat-generating element containing materials such as metal foils, metal plate-graphite carbon, carbon powders or metal powders is used as the heat-generating element and the heat-generating element may or may not be coated with an electrically insulating sheet. When used as a constituent material for the heat-expandable removable acrylic pressure-sensitive adhesive tape, it may be formed in any layer if the advantageous effects of the present invention are not impaired.

The heat-expandable removable acrylic pressure-sensitive adhesive tape according to the present invention is not particularly limited in its configuration, if it has at least a heat expanding agent-containing pressure-sensitive adhesive layer and the initial 90°peel adhesive strength thereof to a polycarbonate plate as adherend is 10 N/25 mm or more and the 90°peel adhesive strength thereof after storage in an atmosphere at 80°C for 2 months as bonded to the polycarbonate adherend and after heat expansion treatment is less than 10 N/25 mm. However, it preferably has a heat expanding agent-containing pressure-sensitive adhesive layer for reduction of the adhesive strength by expansion by heating, and preferably has the heat expanding agent-containing pressure-sensitive adhesive layer at least on or above one face of the bubble-bearing microparticle-containing viscoelastic material for improvement of the compatibility with an irregular-surfaced adherend.

In the present invention, the heat expanding agent-containing pressure-sensitive adhesive layer preferably has a heat-expansion rate of 3 or more after storage in an atmosphere at 80°C for 1 month. When the heat-expansion rate is 3 or more, it is possible to reduce the adhesive power efficiently by heat expansion treatment and thus to separate or disassemble the adhesive sheet from the adherend easily even after storage at high temperature for a long term. The heat-expansion rate is preferably 4 or more, more preferably 5 or more (normally 10 or less). The heat-expansion rate after storage in an atmosphere at 80°C for 1 month can be determined by storing the heat expanding agent-containing pressure-sensitive adhesive layer in an atmosphere at 80°C for 1 month, heat-treating the layer as described below, and comparing the volumes of the heat expanding agent-containing pressure-sensitive adhesive layer before and after heat treatment.

The heat-expansion rate (volume expansion rate) of the heat expanding agent-containing pressure-sensitive adhesive layer can be determined by the following method. Specifically, a test sample with a size of which (length, width, and thickness) previously measured, which has a release film bonded to both faces of the heat expanding agent-containing pressure-sensitive adhesive layer, is placed on a container of an aluminum vat with release paper placed

thereon, and the container is placed in a small high-temperature chamber (trade name: "ST-120", manufactured by ESPEC Corp.) with its damper closed and flow rate is set to be small, wherein the temperature is set to the heat expansion temperature (maximum expansion temperature, e.g., 140°C) of each heat expanding agent (for example, heat-expandable microsphere described below). The test sample is withdrawn approximately after 3 minutes, the release film on the both faces is separated, leaving the heat expanding agent-containing pressure-sensitive adhesive layer exposed, and then, it is placed in the same small high-temperature chamber for 10 minutes for heat treatment.
After the heat treatment, the size (length, width, and thickness) of the sample (heat expanding agent-containing pressure-sensitive adhesive layer) after deformation by expansion of the heat expanding agent by heating was measured and the heat-expansion rate is calculated from the change in volume between before and after the heat treatment.

$$\text{Heat-expansion rate (times)} = (\text{Volume after heat treatment})/(\text{Volume before heat treatment})$$

The maximum expansion temperature of the heat expanding agent (in particular, heat-expandable microsphere) is a temperature at which the volume of the heat expanding agent (in particular, heat-expandable microsphere) is largest.

Favorably, if the heat-expandable removable acrylic pressure-sensitive adhesive tape according to the present invention is an adhesive tape having a heat expanding agent-containing pzessure-sensitive adhesive layer formed on one or both faces of a bubble-bearing microparticle-containing viscoelastic material, it has high normal-state adhesive power when bonded to an adherend and a property (removability) to decrease in adhesive power (adhesive strength) during separation. In particular, because it has a bubble-bearing microparticle-containing viscoelastic material containing bubbles as the substrate, it has favorable level difference-absorbing efficiency and retains its high normal-state adhesive power even when the adherend has irregular surface. Alternatively, it has a property that the adhesive power (adhesive strength) declines easily by expansion of the heat expanding agent by heating during separation. In addition, for protection of the adhesive face of the heat expanding agent-containing pressure-sensitive adhesive layer, it preferably has a release film (separator) on the surface of the heat expanding agent-containing pressure-sensitive adhesive layer.

The heat-expandable removable acrylic pressure-sensitive adhesive tape according to the present invention may have other layers (e.g., intermediate layer or undercoat layer) in the range that does not impair the advantageous effects of the invention.

The intermediate layer is for example a single- or multi-layered intermediate layer formed between the bubble-bearing microparticle-containing viscoelastic material and the heat expanding agent-containing pressure-sensitive adhesive layer. Examples of the intermediate layers include a release agent coating layer for favorable releasability, an undercoat agent coating layer for improvement of adhesion force, a layer for favorable deformability, a layer for expansion of the adhesion area to the adherend, a layer for improvement of adhesive power to the adherend, a layer for favorable compatibility to the surface shape of the adherend, a layer for improvement of the efficiency of reducing adhesive power by heating, a layer for improvement of the releasability after heating and the like.

The heat-expandable removable acrylic pressure-sensitive adhesive tape according to the present invention may be a double-sided adhesive sheet (double-sided adhesive tape) having adhesive faces on the both faces or a single-sided adhesive sheet (single-sided adhesive tape) having an adhesive face only on one side. When the heat-expandable removable acrylic pressure-sensitive adhesive tape according to the present invention is in the configuration of a double-sided adhesive sheet, it may be a so-called base material-less double-sided adhesive sheet made only of the heat expanding agent-containing pressure-sensitive adhesive layers; it may have the heat expanding agent-containing pressure-sensitive adhesive layer as the adhesive face on or above the both faces of the bubble-bearing microparticle-containing viscoelastic material; or it may have one adhesive face provided by the heat expanding agent-containing pressure-sensitive adhesive layer and the other adhesive face provided by a pressure-sensitive adhesive layer other than the heat expanding agent-containing pressure-sensitive adhesive layer (hereinafter, referred to as "no heat expanding agent-containing pressure-sensitive adhesive layer"). The no heat expanding agent-containing pressure-sensitive adhesive layer can be prepared, for example, with a known adhesive (such as acrylic adhesive, rubber-based adhesive, vinyl alkylether-based adhesive, silicone-based adhesive, polyester-based adhesive, polyamide-based adhesive, urethane-based adhesive, fluarirze-based adhesive or epoxy-based adhesive) by a known method of producing a pressure-sensitive adhesive layer. The thickness of the no heat expanding agent-containing pressure-sensitive adhesive layer is not particularly limited, and can be selected properly for example according to the object and the use method.

In addition, the heat-expandable removable acrylic pressure-sensitive adhesive tape according to the present invention may be prepared in the state in which it is wound around a roll or in the state which the sheets thereof are piled. Specifically, the heat-expandable removable acrylic pressure-sensitive adhesive tape may have a shape of sheet, tape of the like. The heat-expandable removable acrylic pressure-sensitive adhesive tape in the state or shape of roll

as it is wound may be in the state or shape in which the tape is wound around a roll as the adhesive face protected with a release film (separator) or in the state or shape in which it is wound around a roll as the adhesive face is protected with a release coating layer (rear-face coating layer) formed on or above the other face of the substrate (e.g., bubble-bearing micxoparticle-containing viscoelastic material). Examples of the release coating agents (release agents) used when a release coating layer (rear-face coating layer) is formed on the face of the substrate include silicone-based release agents, long-chain alkyl-based release agents and the like.

(Heat expanding agent-containing pressure-sensitive adhesive layer)

The heat expanding agent-containing pressure-sensitive adhesive layer is not particularly limited, if it is a layer of an acrylic adhesive containing a heat expanding agent and it normally has an acrylic polymer as the base polymer. In the heat-expandable removable acrylic pressure-sensitive adhesive tape according to the present invention, the base polymer of the heat expanding agent-containing pressure-sensitive adhesive layer may be the same as or different from the base polymer of the bubble-bearing microparticle-containing viscoelastic material described later.

The heat-expandable removable acrylic pressure-sensitive adhesive tape according to the present invention, in which the heat expanding agent-containing pressure-sensitive adhesive layer contains a heat expanding agent, has a property of its adhesive power being reduced easily by expansion of the heat expanding agent under heat (easy releasability). Thus, the heat-expandable removable acrylic pressure-sensitive adhesive tape according to the present invention has a property that it is favorable adhesive to the adherend and yet easily separated from the adherend under heat, independently of whether the adherend has or does not have irregular surface.

The heat expanding agent-containing pressure-sensitive adhesive composition forming the heat expanding agent-containing pressure-sensitive adhesive layer is preferably a heat expanding agent-containing acrylic pressure-sensitive adhesive composition having an acrylic monomer as the principal monomer component. In particular, if an acrylic monomer is used as the principal monomer component in the bubble-bearing microparticle-containing polymerizable composition described later, it is preferable from the viewpoints of processability, cost, and others to use the heat expanding agent-containing pressure-sensitive adhesive composition obtained by blending a heat expanding agent to the bubble-bearing micraparticle-cantaining polymerizable composition excluding bubbles and microparticles. The "pressure-sensitive adhesive composition" in the present invention includes the meaning of a "composition for preparation of adhesive".

The heat expanding agent-containing pressure-sensitive adhesive composition is preferably a heat expanding agent-containing pressure-sensitive adhesive composition containing at least a vinyl monomer mixture or the partial polymer thereof, a photopolymerization initiator, a multifunctional (meth)acrylate, and a heat expanding agent.

The vinyl monomer used in the heat expanding agent-containing pressure-sensitive adhesive composition is not particularly limited, if it is a radical polymerizable monomer having an unsaturated double bond (radical polymerizable monomer), but it is preferably an acrylic monomer from the point of reactivity, and in particular among acrylic monomers, (a1) alkyl (meth)acrylates having an alkyl group of 2 to 18 carbon atoms represented by the following Formula (1). The principal component of the vinyl monomer mixture or the partial polymer thereof used in the heat expanding agent-containing pressure-sensitive adhesive composition is preferably an acrylic monomer, in particular an alkyl (meth)acrylate (a1) represented by the following Formula (1), having a alkyl group of 2 to 18 carbon atoms (straight-chain or branched-chain alkyl group).

[Chem. 1] $CH_2=C(R^1)COOR^2$ (1)

(In Formula (1), $R^1$ represents a hydrogen atom or a methyl group; and $R^2$ represents an alkyl group having 2 to 18 carbon atoms.)

Examples of the alkyl (methacrylates (a1) having an alkyl group of 2 to 18 carbon atoms represented by the Formula (1) above include ethyl (meth)acrylate, n-propyl (meth)acrylate, isopropyl (meth)acrylate, n-butyl (meth)acrylate, sec-butyl (meth)acrylate, t-butyl (meth)acrylate, n-octyl (meth)acrylate, isooctyl (meth)acrylate, 2-ethylhexyl (meth)acrylate, isononyl (meth)acrylate, dodecyl (meth)acrylate, isostearyl (meth)acrylate and the like. These alkyl (meth)acrylates are used alone or in combination of two or more. The "(meth)acrylate" means "acrylate" and/or "methacrylate" and the same shall apply to other similar terms.

The heat expanding agent-containing pressure-sensitive adhesive composition may contain the vinyl monomer and also an additional copolymerizable monomer. Thus, the vinyl monomer mixture or the partial polymer thereof contained in the heat expanding agent-containing pressure-sensitive adhesive composition may contain a copolymerizable monomer.

Examples of the copolymerizable monomers include carboxyl group-containing monomers such as ethylenic unsaturated monocarboxylic acids (e.g., acrylic acid, methacrylic acid, crotonic acid, carboxyethyl acrylate, carboxypentyl acrylate), ethylenic unsaturated dicarboxylic acids (e.g., maleic acid, itaconic acid, citraconic acid), and anhydrides of

ethylenic unsaturated dicarboxylic acids (e.g., maleic anhydride, itaconic anhydride); hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)aciylate, 8-hydroxyoctyl (meth)acrylate, 10-hydroxydecyl (meth)acrylate, 12-hydroxylauryl (meth)acrylate, and (4-hydroxymethylcyclohexyl) methyl acrylate; sulfonic acid group-containing monomers such as 2-acrylamido-2-methylpropanesulfonic acid and sulfopropyl acrylate; phosphoric acid group-containing monomers such as 2-hydroxyethyl acryloyl phosphate; amide-based monomers such as (meth)acrylamide and N-substituted (meth)acrylamides such as N-znethylol (meth)acrylamide; succinimide monomers such as N-(meth)acryloyloxymethylene succinimide, N-(meth) acryloyl-6-oxyhexamethylene succinimide, and N-(meth)acryloyl-8-oxyoctamethylene succinimide; cyanoacrylate monomers such as acrylonitrile and methacrylonitrile; alkyl (meth)acrylates having an alkyl group different from that in the alkyl (meth)acrylates of the principal component, such as methyl (meth)acrylate and octadecyl (meth)acrylate; alicyclic acrylates such as isobornyl (meth)acrylate; vinyl acetate; N-vinylpyrrolidone; N-vinylcarboxylic amides; styrene; N-vinylcaprolactam; glycidyl (meth)acrylate; tetrahydrofurfuryl (meth)acrylate; polyethylene glycol (meth)acrylate; polypropylene glycol (meth)acrylate; fluorine-containing (meth)acrylate; silicone (meth)acrylate; 2-methoxyethyl acrylate and the like. The copolymerizable monomers can be used alone or in combination of two or more. The "carboxyl group-containing monomer" means a vinyl monomer (ethylenic unsaturated monomer) having at least one carboxyl group (possibly in the form of anhydride) in one molecule.

When a copolymerizable monomer is used in the vinyl monomer mixture or the partial polymer thereof constituting the heat expanding agent-containing pressure-sensitive adhesive composition, preferably, the vinyl monomer rate is 50 to 99.9 wt % and the copolymerizable monomer rate 0.1 to 50 wt %; and more preferably, the vinyl monomer rate is 60 to 99.9 wt % and the copolymerizable monomer rate 0.1 to 40 wt %. Yet more preferably, the vinyl monomer rate is 70 to 99.5 wt % and the copolymerizable monomer rate 0.5 to 30 wt %. Yet more preferably, the vinyl monomer rate is 80 to 99 wt % and the copolymerizable monomer rate 1 to 20 wt %.

The copolymerizable monomer for use is preferably a hydroxyl group-containing monomer or a carboxyl group-containing monomer, and in particular, acrylic acid is used favorably. The use rate is preferably 1 to 10 wt % with respect to the total amount of the monomer components. The adhesive power can be improved, if the copolymerizable monomer is used in the range above.

When the tape is used to the adherend made of a raw material of a metal such as SUS, a N-hydroxyalkyl(meth) acrylamide monomer (a2) represented by the following Formula (2) and a nitrogen-containing monomer (a3) are preferably used additionally as the copolymerizable monomers for prevention of increase in adhesive power by heating and control of corrosion of the adherend.

[Chem. 2] $CH_2=C(R^3)CONHR^4$ (2)

(In Formula (2), $R^3$ represents a hydrogen atom or a methyl group; and $R^4$ represents a hydroxyalkyl group having 1 to 4 carbon atoms).

By combined use of a N-hydroxyalkyl(meth)acrylamide monomer (a2) represented by Formula (2) and a nitrogen-containing monomer (a3), it is possible to improve adhesive power, similarly to the case when a hydroxyl group-containing monomer or a carboxyl group-containing monomer (in particular, acrylic acid) is used as the copolymerizable monomer in the use rate above, even if an acidic group-containing monomer, such as a carboxyl group-containing monomer or a monomer (sulfonic acid group-containing monomer, phosphoric acid group-containing monomer, etc.) containing an acidic group other than carboxyl group (sulfonic acid group, phosphoric acid group, etc.) is not contained substantially as the monomer component forming the acrylic polymer of the base polymer. It is possible to make the heat-expandable removable acrylic pressure-sensitive adhesive tape favorably adhesive to the adherend and yet easily removal from it by heating, independently of whether the adherend has irregular surface. In addition, since the copolymerizable monomer does not contain the acidic group-containing monomer substantially, it is possible to prevent significantly corrosion of the metal face that occurs when the heat-expandable removable acrylic pressure-sensitive adhesive tape according to the present invention is bonded to a metal surface directly.

The term "not containing substantially" means that the acidic group-containing monomer is not contained at all or the content is 0.1 wt % or less with respect to the total amount of the monomer components. For example, the term "not containing carboxyl group-containing monomer substantially" as the monomer component means that the carboxyl group-containing monomer is not contained at all or the content is 0.1 wt % or less with respect to the total amount of the monomer components.

When a N-hydroxyalkyl(meth)acrylamide monomer (a2) represented by Formula (2) and a nitrogen-containing monomer (a3) are used as copolymerizable monomers in combination, the content of the alkyl (meth)acrylate monomer having an alkyl group of 2 to 18 carbon atoms (a1) represented by Formula (1) in the vinyl monomer mixture or the partial polymer thereof containing an alkyl (meth)acrylate monomer (a1) having an alkyl group of 2 to 18 carbon atoms represented by Formula (1), a N-hydroxyalkyl(meth)acrylamide monomer (a2) represented by Formula (2), and a nitrogen-containing monomer (a3) as monomer components may be 50 to 85 wt % (preferably 60 to 80 wt %).

The N-hydroxyalkyl(meth)acrylamide monomer (a2) represented by Formula (2) can function as a component contributing to improvement of the adhesive's cohesive property, by molecular interaction of the N-hydroxyalkyl(metli) acrylamide monomer molecules.

[Chem. 3] $CH_2=C(R^3)CONHR^4$ (2)

(In Formula (2), $R^3$ represents a hydrogen atom or a methyl group; and $R^4$ represents a hydroxyalkyl group having to 4 carbon atoms).
In Formula (2) above, the hydroxyalkyl group $R^4$ may have a linear- or branched-chain structure.

Examples of the N-hydroxyalkyl(meth)acrylamide monomers (a2) represented by Formula (2) include N-methylol(meth)acrylamide, N-(2-hydroxyethyl)acrylamide, N-(2-hydroxyethyl)methacrylamide, N-(2-hydroxypropyl)acrylamide, N-(2-hydroxypropyl)methacrylamide, N-(1-hydroxypropyl)acrylainide, N-(1-hydroxypropyl)methacrylamide, N-(3-hydroxypropyl)acrylamide, N-(3-hydroxypropyl)methacrylamide, N-(2-hydroxybutyl)acrylamide, N-(2-hydroxybutyl) methacrylamide, N-(3-hydroxybutyl)acrylamide, N-(3-hydroxybutyl)methacrylamide, N-(4-hydroxybutyl)acrylamide, N-(4-hydroxybutyl)methacrylamide and the like. The N-hydroxyalkyl(meth)acrylamide monomers (a2) represented by Formula (2) can be used alone or in combination of two or more.

In particular, the N-hydroxyalkyl(meth)acrylamide monomer (a2) represented by Formula (2) is preferably N-(2-hydroxyethyl)acrylamide or N-(2-hydroxyethyl)methaerylamide, particularly preferably N-(2-hydroxyethyl)acrylamide (HEAA), because it is possible to form a heat expanding agent-containing pressure-sensitive adhesive layer superior in the balance of hydrophilicity and hydrophobicity and also in the balance with adhesive properties, In particular, it is preferable to use N-(2-hydroxyethyl)acrylamide (HEAA) as the N-hydroxyalkyl(meth)acrylamide monomer (a2) represented by Formula (2) in an amount of 50 wt % or more (more preferably 70 wt % or more, typically substantially completely), with respect to the total amount of the N-hydroxyalkyl(meth)acrylamide monomer (a2) represented by Formula (2).

The content of the N-hydroxyalkyl(meth)acrylamide monomer (a2) represented by Formula (2) is preferably 0.1 to 12 wt %, more preferably 1 to 10 wt %, with respect to the total amount of the monomer components constituting the vinyl monomer mixture or the partial polymer thereof in the heat expanding agent-containing pressure-sensitive adhesive composition. When the content is less than 0.1. wt %, the tackiness (in particular, adhesiveness at high temperature, resistance to separation under particular stress, etc.) of the heat expanding agent-containing pressure-sensitive adhesive layer formed with the heat expanding agent-containing pressure-sensitive adhesive composition may become insufficient. Alternatively, when it is more than 12 wt %, the tackiness and adhesiveness at low temperature may become insufficient.

In a favorable embodiment of the heat expanding agent-containing pressure-sensitive adhesive composition, when the N-hydroxyalkyl(meth)acrylamide monomer (a2) represented by Formula (2) and the nitrogen-containing monomer (a3) are used as the copolymerizable monomers in combination, for example, the content of the N-hydroxyalkyl (meth)acrylamide monomer (a2) represented by Formula (2) is preferably 2 wt % or more (typically 2 to 12 wt %), more preferably 3 wt % or more (typically 3 to 12 wt %, particularly typically 3 to 10 wt %), with respect to the total amount of the monomer components constituting the vinyl monomer mixture or the partial polymer thereof in the heat expanding agent-containing pressure-sensitive adhesive composition. Such a heat expanding agent-containing pressure-sensitive adhesive composition has an advantageous effect of giving a heat-expandable removable acrylic pressure-sensitive adhesive tape higher in cohesive power and repelling resistance.

The weight ratio of the alkyl (meth)acrylate having an alkyl group of 2 to 18 carbon atoms (a1) represented by Formula (1) to the N-hydroxyalkyl(meth)acrylamide monomer (a2) represented by Formula (2) [(a1)/ (a2)] is preferably 99/1 to 80/20 (preferably 98/2 to 85/15, more preferably, 97/3 to 90/10). A heat expanding agent-containing pressure-sensitive adhesive composition having such a weight ratio has an advantageous effect to giving a heat-expandable removable acrylic pressure-sensitive adhesive tape higher in cohesive power and repelling resistance.

The total amount of the alkyl (meth)acrylate having an alkyl group of 2 to 18 carbon atoms (a1) represented by Formula (1) and the N-hydroxyalkyl(meth)acrylamide monomer (a2) represented by Formula (2) is preferably 60 wt % or more (60 to 90 wt %), preferably 70 wt % or more (70 to 90 wt %), with respect to the total amount of the monomer components constituting the vinyl monomer mixture or the partial polymer thereof contained in the heat expanding agent-containing pressure-sensitive adhesive composition. A total amount of less than 60 wt % may cause problems of deterioration in adhesiveness and tackiness at low temperature.

The nitrogen-containing monomer (a3) is a monomer containing one or more nitrogen elements in the monomer molecule and one or more monomers selected from the group consisting of N-vinyl cyclic amide and (meth)acrylamides that may have N-alkyl groups. The N-hydroxyalkyl(meth)acrylamide monomers (a2) represented by Formula (2) are not included in the nitrogen-containing monomers (a3). The nitrogen-containing monomers (a3) can be used alone or in combination of two or more.

Examples of the (meth)acrylamides that may have N-alkyl groups include (meth)acrylamide, and N-alkyl(meth)acrylamides such as N-ethyl(meth)acrylamide and N-n-butyl(meth)acrylamide; N,N-diallkyl(meth)acrylamides such as N,N-dimethyl(meth)acrylamide, N,N-diethyl(meth)acrylamide, N,N-dipropyl(meth)acrylamide, N,N-diisopropyl(meth) acrylamide, N,N-di(n-butyl)(meth)acrylamide, and N,N-di(t-butyl)(meth)acrylamide; and the like. In particular, use of an (meth)acrylamide having one or two N-alkyl groups with a carbon number of 1 to 4 (more preferably 1 or 2) (e.g., an N, N-dialkylacrylamide such as N,N-diethylacrylamide or N,N-dimethylacrylamide) is preferable.

The N-vinyl cyclic amide is preferably an N-vinyl cyclic amide represented by the following Formula (3):

[Chem. 4]

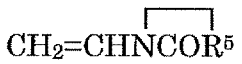

(3)

(In Formula (3), $R^5$ represents a bivalent organic group.)

In Formula (3), $R^5$ is preferably a saturated or unsaturated hydrocarbon group, more preferably a saturated hydrocarbon group (e.g., an alkylene group having 3 to 5 carbon atoms).

Examples of the N-vinyl cyclic amides represented by Formula (3) above include N-vinyl-2-pyrrolidone, N-vinyl-2-piperidone, N-vinyl-3-morpholinone, N-vinyl-2-caprolactam, N-vinyl-1,3-oxazin-2-one, N-vinyl-3,5-morpholine-dione and the like. In particular, N-vinyl-2-pyrrolidone is preferable.

When an N-vinyl cyclic amide represented by Formula (3) is used as the nitrogen-containing monomer (a3), it is possible to obtain a heat expanding agent-containing pressure-sensitive adhesive composition that can give a heat expanding agent-containing pressure-sensitive adhesive layer superior in the balance of adhesive properties.

The content of the nitrogen-containing monomer (a3) is preferably 10 to 40 wt %, more preferably 15 to 35 wt %, with respect to the total amount of the monomer components constituting the vinyl monomer mixture or the partial polymer thereof in the heat expanding agent-containing pressure-sensitive adhesive composition. When the nitrogen-containing monomer (a3) content is more than 40 wt %, the properties (adhesiveness and others as adhesive) in low temperature environment of the heat expanding agent-containing pressure-sensitive adhesive layer formed with the heat expanding agent-containing pressure-sensitive adhesive composition may decline. Alternatively, when the nitrogen-containing monomer (a3) content is less than 10 wt %, adhesive power (e.g., peeling strength) and the repelling resistance may decline.

The total amount of the alkyl (meth)acrylate monomer having an alkyl group of 2 to 18 carbon atoms (a1), the N-hydroxyalkyl(meth)acrylamide monomer (a2), and the nitrogen-containing monomer (a3) is preferably 70 wt % or more (preferably 90 wt % or more, more preferably 95 wt % or more), with respect to the total amount of the monomer components constituting the vinyl monomer mixture or the partial polymer thereof contained in the heat expanding agent-containing pressure-sensitive adhesive composition. A total amount of less than 70 wt % makes it difficult to balance the adhesive properties and to obtain desired tackiness.

For example, if a heat expanding agent-containing pressure-sensitive adhesive composition, containing a vinyl monomer mixture or the partial polymer thereof comprising a alkyl (meth)acrylate monomer having an alkyl group of 2 to 18 carbon atoms (a1) represented by Formula (1) monomer, a N-hydroxyalkyl(meth)acrylamide monomer (a2) represented by Formula (2), and a nitrogen-containing monomer (a3) as monomer components, a photopolymerization initiator, a heat expanding agent, and a multifunctional (meth)acrylate is used, because it does not contain substantially (i.e., not at all or in an amount of 0.1 wt % or less with respect to the total monomer components) a carboxyl group-containing monomer and other acidic group-containing monomers (including carboxyl group-containing monomers and other acidic group-containing monomers), it is possible to form a heat expanding agent-containing pressure-sensitive adhesive layer that is favorably adhesive to the adherend, yet easily removable from the adherend by heating, independently of whether the adherend has irregular surface, and highly resistant to corrosion of the metal surface. In addition, such a heat expanding agent-containing pressure-sensitive adhesive composition has an advantageous effect of giving a heat-expandable removable acrylic pressure-sensitive adhesive tape superior in cohesive power and repelling resistance with simple composition.

Various polymerization initiators (for example, thermal polymerization initiators, photopolymerization initiators) may be used as the polymerization initiators in the heat expanding agent-containing pressure-sensitive adhesive composition without any restriction, and in particular, a, photopolymerization initiator can be used favorably for reduction of polymerization period.

If a heat expanding agent-containing pressure-sensitive adhesive composition containing a polymerization initiator such as thermal polymerization initiator or photopolymerization initiator is used in preparation of the heat expanding agent-containing pressure-sensitive adhesive layer, it is possible to use the curing reaction under heat or active-energy ray and thus to form a heat expanding agent-containing pressure-sensitive adhesive layer by curing the heat expanding agent-containing pressure-sensitive adhesive composition, as a heat expanding agent is mixed therein. Thus,

it is possible to obtain easily a heat expanding agent-containing pressure-sensitive adhesive layer having a structure in which the heat expanding agent is contained as stabilized. It is preferable in the present invention to use a photopolymerization initiator as the polymerization initiator and thus to prepare a heat expanding agent-containing pressure-sensitive adhesive layer having a structure in which the heat expanding agent is contained as stabilized by using the polymerization reaction (photocuring reaction) initiated by active-energy ray. The polymerization initiators may be used alone or in combination of two or more.

The photopolymerization initiator used in the heat expanding agent-containing pressure-sensitive adhesive composition for preparation of the heat expanding agent-containing pressure-sensitive adhesive composition layer is not particularly limited, and examples thereof for use include benzoin ether-based photopolymerization initiators, acetophenone-based photopolymerization initiators, α-ketol-based photopolymerization initiators, aromatic sulfonyl chloride-based photopolymerization initiators, photoactive oxime-based photopolymerization initiators, benzoin-based photopolymerization initiators, benzil-based photopolymerization initiators, benzophenone-based photopolymerization initiators, ketal-based photopolymerization initiators, thioxanthone-based photopolymerization initiators and the like.

Typical examples of the benzoin ether-based photopolymerization initiators include benzoin methyl ether, benzoin ethyl ether, benzoin propyl ether, benzoin isopropyl ether, benzoin isobutyl ether, 2,2-dimethoxy-1,2-diphenylethan-1-one, anisole methyl ether and the like. Examples of the acetophenone-based photopolymerization initiators include 2,2-diethoxyacetaphenone, 2,2-dimethoxy-2-phenylacetophenone, 1-hydroxycyclohexylphenylketone, 4-phenoxydichloroacetophenone, 4-t-butyl-dichloroacetophenone and the like. Examples of the α-ketol-based photopolymerization initiators include 2-methyl-2-hydroxypropiophenone, 1-[4-(2-hydroxyethyl)-phenyl]-2-hydroxy-2-methylpropan-1-one and the like. Examples of the aromatic sulfonyl chloride-based photopolymerization initiators include 2-naphthalene sulfonyl chloride and the like. Examples of the photoactive oxime-based photopolymerization initiators include 1-phenyl-1,1-propandione-2-(o-ethaxycarbonyl)-oxime and the like. Examples of the benzoin-based photopolymerization initiators include benzoin and the like. Examples of the benzil-based photopolymerization initiators include benzil and the like. Examples of the benzophenone-based photopolymerization initiators include benzophenone, benzoylbenzoic acid, 3,3'-dimetliyl-4-mothoxybenzophenone, polyvinylbenzophenone, α-hydroxycyclohexylphenylketone and the like. Examples of the ketal-based photopolymerization initiators include benzyldimethyl ketal and the like. Examples of the thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, dodecylthioxanthone and the like.

Examples of the thermal polymerization initiators used in the heat expanding agent-containing pressure-sensitive adhesive composition include azo-based thermal polymerization initiators such as 2,2'-azobisisobutylonitrile, 2,2'-azobis-2-methylbutylonitrile, dimethyl 2,2'-azobis(2-methylpropionate), 4,4'-azobis-4-cyanovalerianic acid, azobisisovaleronitrile, 2,2'-azobis(2-amidino propane) dihydrochloride, 2,2'-azobis[2-(5-methyl-2-imidazolin-2-yl)propane] dihydrochloride, 2,2'-azobis(2-methylpropionamidine) disulfate salt, and 2,2'-azabis(N,N'-dimethylene isobutyl amidine) dihydrochloride; peroxide-based thermal polymerization initiators such as dibenzoyl peroxide and tert-butyl permaleate; redox-based thermal polymerization initiators and the like. The amount of the thermal polymerization initiator used is not particularly limited, if it is in the range traditionally usable as thermal polymerization initiators.

The amount of the photopolymerization initiator used in the heat expanding agent-containing pressure-sensitive adhesive composition is 0.001 to 5 parts by weight (preferably 0.01 to 5 parts by weight, more preferably, 0.05 to 3 parts by weight), with respect to 100 parts by weight of all monomer components in the vinyl monomer mixture or the partial polymer thereof contained in the heat expanding agent-containing pressure-sensitive adhesive composition.

In activation of the photopolymerization initiator, active-energy ray is irradiated to the heat expanding agent-containing pressure-sensitive adhesive composition. Examples of the active-energy ray include ionizing radiation rays such as α ray, β rays, γ ray neutron beam, and electron beam; ultraviolet ray; and the like, and in particular, ultraviolet ray is preferable. For example, the irradiation energy and the exposure period of the active energy ray are not particularly limited as long as they are suitable for activation of the photopolymerization initiator and induction of the reaction between monomer components.

The heat expanding agents for use in the heat expanding agent-containing pressure-sensitive adhesive composition include heat-expandable microspheres that contain a substance that expands easily by gasification under heat such as isobutane, propane, and pentane in shells (outer shell) of an elastic shell substance.

Examples of the shell substances (shell-forming substance) for the heat-expandable microsphere used in the present invention include vinylidene chloride-acrylonitrile copolymers, polyvinylalcohol, polyvinylbutyral, polymethyl methacrylate, polyacrylonitrile, polyvinylidene chloride, polysulfone and the like. The heat-expandable microsphere can be prepared by a common method, such as coacervation method or interfacial polymerization method.

The glass transition temperature (Tg) of the shell substance of the heat-expandable microsphere is preferably 92°C or higher, more preferably 92 to 200°C, and more preferably 93 to 180°C. When the glass transition temperature is 92°C or higher, the heat-expandable removable acrylic pressure-sensitive adhesive tape efficiently expands thermally even after storage at high temperature for an extended period of time, and thus, it is easy to control the 90°peel adhesive

strength after storage in an atmosphere at 80°C for 2 months and heat expansion treatment in the range described above. As a result, when the heat expanding agent-containing pressure-sensitive adhesive layer is formed in the heat-expandable removable acrylic pressure-sensitive adhesive tape according to the present invention, it is possible to separate or disassembled the adhesive tape easily from the adherend even after storage at high temperature for a long term. Although the reason is not clear, it seems that, when a known heat-expandable microsphere with a shell substance having low glass transition temperature is used, the shell substance softens when stored at high temperature for an extended period of time, leading to diffusion of the substance that readily gasifies and expands by heating as described above through the shell substance and thus prohibiting sufficiently high thermal expansion efficiency It seems that, if a microsphere with a shell substance having a glass transition temperature of 92°C or higher is used, the shell substance does not soften even after storage at high temperature for an extended period of time, making the microsphere show favorable thermal expansion efficiency without permeation or diffusion of the substance that gasifies and expands by heating as described above.

A commercial product may be used as the heat-expandable microsphere. Examples of the commercial products of the heat-expandable microsphere include, but are not particularly limited to, trade name: "Matsumoto Microsphere F-80S" (expansion initiation temperature: 140 to 150°C), "Matsumoto Microsphere F-190D" (expansion initiation temperature: 160 to 170°C), "Matsumoto Microsphere F-230D" (expansion initiation temperature: 180 to 190°C) and "Matsumoto Microsphere F-260D" (expansion initiation temperature: 190 to 200°C) (manufactured by Matsumoto Yushi-Seiyaku Co., Ltd.); trade name: "Expancel microsphere 051DU40" (expansion initiation temperature: 108 to 113°C), "Expancel microsphere 461DU40" (expansion initiation temperature: 98 to 104°C) and "Expancel microsphere 920DU40" (expansion initiation temperature: 123 to 133°C) (manufactured by Expancel) and the like.

The average diameter of the heat-expandable microsphere is generally preferably 1 to 80 μm, more preferably 3 to 50 μm, from the points of dispersibility and thin layer-forming efficiency.

The heat-expandable microsphere preferably has favorable strength making it resistant to bursting until the coefficient of volume expansion becomes 5 times or more, particularly 10 times or more, for efficient reduction of the adhesive power of the adhesive layer (heat expanding agent-containing pressure-sensitive adhesive layer) containing heat-expanding agent by heat treatment (heat expansion treatment). If a heat-expandable microsphere that bursts at low volume expansion coefficient is used or if a heat expanding agent not microcapsulated is used, it is not possible to reduce the adhesive area between the heat expanding agent-containing pressure-sensitive adhesive layer and the adherend sufficiently by heat expansion treatment, and thus to obtain favorable releasability.

The amount of the heat expanding agent (in particular, heat-expandable microsphere) used may vary depending on the kind thereof, but is, for example 10 to 200 parts by weight, preferably 20 to 125 parts by weight, more preferably 25 to 100 parts by weight, with respect to 100 parts by weight of all monomer components for the vinyl monomer mixture or the partial polymer thereof constituting the heat expanding agent-containing pressure-sensitive adhesive composition. An amount of less than 10 parts by weight may prohibit effective reduction of the adhesive power after heat treatment (heat expansion treatment), while an amount of more than 200 parts by weight may cause cohesive failure of the heat expanding agent-containing pressure-sensitive adhesive layer or fracture at the interface with the bubble-bearing microparticle-containing viscoelastic material.

The other heat expanding agent used in heat expanding agent-containing pressure-sensitive adhesive compositions are, for example, various inorganic expanding agents and organic expanding agents. Typical examples of the inorganic expanding agents include ammonium carbonate, ammonium bicarbonate, sodium bicarbonate, ammonium nitrite, sodium borohydride, azides and the like. Alternatively, typical examples of the organic expanding agents include water; chlorofluoroalkanes such as trichloromonofluoromethane and dichloromonofluoromethane; azo compounds such as azobisisobutylonitrile, azodicarbonamide, and barium azodicarboxylate; hydrazine compounds such as para-toluenesulfonyl hydrazide, diphenyl sulfone-3,3'-disulfonyl hydrazide, 4,4'-oxybis(benzenesulfonyl hydrazide), and allyl bis (sulfonylhydrazide); semicarbazide compounds such as ρ-toluilenesulfonyl semicarbazide and 4,4'-oxybis(benzenesulfonyl semicarbazide triazole compounds such as 5-morpholyl-1,2,3,4-thiatriazole; N-nitroso compounds such as N,N'-dinitrosopentamethylenetetramine and N,N'-dimethyl-N,N'-dinitrosoterephthalamide; and the like. The heat expanding agents may be used alone or in combination of two or more. The heat expanding agent-containing pressure-sensitive adhesive composition may contain an expansion assistant additionally, as needed.

The multifunctional (meth)acrylate used in the heat expanding agent-containing pressure-sensitive adhesive composition is not particularly limited, if it is a compound having at least two (meth)acryloyl groups.

Examples of the multifunctional (meth)acrylates include trimethylolpropane tri(meth)acrylate, tetramethylolmethane tetraacrylate, pentaerythritol di(meth)acrylate, pentaerythritol tri(meth)acrylate, pentaerythritol tetra(meth)acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(moth)acrylate, polyethylene glycol di(meth)acrylate, hexanediol di(meth)acrylate, (poly)ethylene glycol di(meth)acrylate, (poly) propylene glycol di(meth)acrylate, neopentylglycol di(meth)acrylate, tetramethylolmethane tri(meth)acrylate, allyl (meth) acrylate, vinyl (meth)acrylate, epoxy acrylates, polyester acrylates, urethane acrylates, reactive hyperbranched polymers

having multiple (meth)acryloyl groups at the terminals [e.g., "CN2300" "CN2301" "CN2320" (trade name, manufactured by SARTOMER)] and the like. The multifunctional (meth)acrylates may be used alone or in combination of two or more.

The multifunctional (meth)acrylate is preferably blended in such an amount that the amount of the solvent-insoluble matter in the heat expanding agent-containing pressure-sensitive adhesive layer formed with the heat expanding agent-containing pressure-sensitive adhesive composition becomes 35 to 99 wt %, preferably 50 to 99 wt %, more preferably 70 to 95 wt %. Thus, the content of the solvent-insoluble matter in the heat expanding agent-containing pressure-sensitive adhesive layer is preferably 35 to 99 wt %, more preferably 50 to 99 wt %, still more preferably 70 to 95 wt %. It is because a solvent-insoluble matter content of less than 35 wt % may make it difficult to separate the tape by expansion, while a content of more than 99 wt % may lead to deterioration in compatibility, thus inhibiting adhesion.

The solvent-insoluble matter content in the heat expanding agent-containing pressure-sensitive adhesive layer is the "rate of the solvent insoluble component" in the heat expanding agent-containing pressure-sensitive adhesive layer, which is a value calculated by the "method of determining the solvent-insoluble matter content in the heat expanding agent-containing pressure-sensitive adhesive layer" below. The solvent-insoluble matter in the heat expanding agent-containing pressure-sensitive adhesive layer includes solvent-insoluble heat expanding agents.

The solvent-insoluble matter content in the heat expanding agent-containing pressure-sensitive adhesive layer is determined in the following way: Approximately 1 g of a heat expanding agent-containing pressure-sensitive adhesive layer is collected and weighed accurately, to determine the weight of the heat expanding agent-containing pressure-sensitive adhesive layer before immersion. Then, it is immersed in approximately 40 g of ethyl acetate at 23°C for 7 days; the matter insoluble in ethyl acetate is recovered completely and dried at 130°C for 2 hours; and the dry weight of the insoluble matter is determined. Then, the solvent-insoluble matter content is calculated by substituting the values into the following Formula:

$$\text{Solvent-insoluble matter content in the heat expanding agent-containing pressure-sensitive adhesive layer (\%)} = (\text{Dry weight of insoluble matter/Weight of heat expanding agent-containing pressure-sensitive adhesive layer before immersion}) \times 100$$

The multifunctional (meth)acrylate is used, as described above, in such an amount that the solvent-insoluble matter content in the heat expanding agent-containing pressure-sensitive adhesive layer is in the range above, and the typical amount may vary according to the molecular weight and the number of functional groups, but it is normally used in an amount of 0.001 to 5 parts by weight, preferably 0.001 to 3 parts by weight, more preferably 0.01 to 2 parts by weight, with respect to 100 parts by weight of all monomer components in the vinyl monomer mixture or the partial polymer thereof contained in the heat expanding agent-containing pressure-sensitive adhesive composition. When the amount is more than 5 parts by weight, for example, the heat expanding agent-containing pressure-sensitive adhesive layer may have excessively large cohesive power, leading to deterioration of the pressure-sensitive adhesive power, while when it is too small (e.g., less than 0.001 part by weight), for example, the heat expanding agent-containing pressure-sensitive adhesive layer may have decreased cohesive power.

The heat expanding agent-containing pressure-sensitive adhesive composition may contain various additives blended additionally Examples of the additives include crosslinking agents such as isocyanate-based crosslinking agents and epoxy-based crosslinking agents; tackifiers such as rosin derivative resins, polyterpene resins, petroleum resins, and oil-soluble phenol resins; plasticizers; fillers; aging inhibitors; surfactants and the like.

The method of forming the heat expanding agent-containing pressure-sensitive adhesive layer is not particularly limited, and it is formed, for example, by coating a heat expanding agent-containing pressure-sensitive adhesive composition on a suitable substrate such as a release film or a base material, thus forming a heat expanding agent-containing pressure-sensitive adhesive composition layer, and drying and curing (curing by heating or active-energy ray irradiation) the layer, as needed. Since the photopolymerization reaction is inhibited by oxygen in air, it is preferable to block oxygen during active-energy ray curing (photocuring) by bonding a suitable substrate such as a release film or a base material to on the layer or performing photocuring under nitrogen atmosphere. The suitable substrate used in preparation of the heat expanding agent-containing pressure-sensitive adhesive layer may be separated at a suitable time before preparation of the heat-expandable removable acrylic piessure-sensitive adhesive tape according to the present invention or before use of the heat-expandable removable acrylic pressure-sensitive adhesive tape after preparation.

The thickness of the heat expanding agent-containing pressure-sensitive adhesive layer is selected properly depending on the use purpose of the heat-expandable removable pressure-sensitive adhesive tape according to the

present invention and the decrease of the adhesive power thereof by heating, but, for assurance of surface smoothness, it is preferably larger than the maximum diameter of the heat expanding agent (in particular, heat-expandable microsphere) and specifically, 1 to 300 μm, preferably 10 to 250 μm, more preferably 30 to 200 μm. When the heat expanding agent-containing pressure-sensitive adhesive layer is extremely thin, it may not have adhesive power sufficient for holding the adherend. The heat expanding agent-containing pressure-sensitive adhesive layer may be in a single- or multi-layered configuration.

(Bubble-bearing microparticle-containing viscoelastic material)

The bubble-bearing microparticle-containing viscoelastic material is a layer formed by using the microparticle-containing polymerizable composition, and a layer obtained preferably by polymerizing a microparticle-containing polymerizable composition containing bubbles (hereinafter, referred to as "bubble-bearing micropartile-containing polymerizable composition"). The bubble-bearing microparticle-containing viscoelastic material contains bubbles and microparticles and has viscoelastic property. The heat-expandable removable acrylic pressure-sensitive adhesive tape having a bubble-bearing microparticle-containing viscoelastic material exhibits favorable level difference-absorbing efficiency to the irregular surface of the adherend because the bubble-bearing microparticle-containing viscoelastic material, contains bubbles, and exhibits high normal-state adhesiveness when bonded to the adherend because the bubble-bearing microparticle-containing viscoelastic material contains microparticles. The bubble-bearing microparticle-containing viscoelastic material may be a bubble-bearing microparticle-containing viscoelastic base material.

The bubble-bearing microparticle-containing polymerizable composition constituting such a bubble-bearing microparticle-containing viscoelastic material is a composition including at least a base polymer-forming monomer mixture or its partial polymer, microparticles and, bubbles.

The base polymer is not particularly limited, if the bubble-bearing microparticle-containing viscoelastic material has viscoelastic properties, and is selected properly for example from base polymers for pressure-sensitive adhesives including acrylic pressure-sensitive adhesives, rubber-based pressure-sensitive adhesives, vinyl alkylether-based pressure-sensitive adhesives, silicone-based pressure-sensitive adhesives, polyester-based pressure-sensitive adhesives, polyamide-based pressure-sensitive adhesives, urethane-based pressure-sensitive adhesives, fluorine-containing pressure-sensitive adhesives, and epoxy-based pressure-sensitive adhesives.

The base polymers may be used alone or in combination of two or more. The base polymer favorably used is a base polymer for acrylic pressure-sensitive adhesives. The acrylic pressure-sensitive adhesive normally contains an acrylic polymer as the base polymer. Thus, the bubble-bearing micropartile-containing polymerizable composition forming the bubble-bearing microparticle-containing viscoelastic material is preferably a bubble-bearing microparticle-containing polymerizable composition containing a vinyl monomer as a monomer component for acrylic polymers as the principal monomer component, in particular, a bubble-bearing microparticle-containing polymerizable composition including a vinyl monomer mixture or the partial polymer thereof, a photopolymerization initiator, microparticles, a multifunctional (meth)acrylate, and bubbles.

The vinyl monomer used in the bubble-bearing microparticle-containing polymerizable composition is not particularly limited, if it is a radically polymerizable monomer (radical polymerizable monomer) having an unsaturated double bond, but it is preferably an acrylic monomer from the point of reactivity, in particular an alkyl (meth)acrylate having an alkyl group of 2 to 18 carbon atoms among the acrylic monomers above. Thus, the principal component of the vinyl monomer mixture or the partial polymer thereof used in the bubble-bearing microparticle-containing polymerizable composition is preferably an acrylic monomer, in particular an alkyl (meth)acrylate having an alkyl group (straight-chain or branched-chain alkyl group) having 2 to 18 carbon atoms. The "principal component" is a component that is used in an amount of 50 wt % or more, and the same shall apply to other similar terms.

Examples of the alkyl (meth)acrylates having an alkyl group of 2 to 18 carbon atoms include ethyl (meth) acrylate, n-propyl (meth)acrylate, isopropyl (meth)acrylate, n-butyl (meth)acrylate, sec-butyl (meth)acrylate, t-butyl (meth)acrylate, n-octyl (meth)acrylate, isooctyl (meth)acrylate, 2-ethylhexyl (meth)acrylate, isononyl (meth)acrylate, dodecyl (meth)acrylate, isostearyl (meth)acrylate and the like. These alkyl (meth)acrylates are used alone or in combination of two or more.

The bubble-bearing microparticle-containing polymerizable composition may contain a copolymerizable monomer together with the vinyl monomer. Thus, the vinyl monomer mixture or the partial polymer thereof contained in the bubble-bearing microparticle-containing polymerizable composition may contain a copolymerizable monomer. Examples of the copolymerizable monomers include carboxyl group-containing monomers such as acrylic acid, methacrylic acid, carboxyethyl acrylate, carboxypentyl acrylate, itaconic acid, maleic acid, and crotonic acid; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth) acrylate, and (4-hydroxymethylcyclohoxyl)-methyl acrylate; acid anhydride monomers such as maleic anhydride and itaconic anhydride; sulfonic acid group-containing monomers such as 2-acrylamido-2-methylpropanesulfonic acid, and

sulfopropyl acrylate; phosphoric acid group-containing monomers such as 2-hydroxyethyl acryloyl phosphate; amide monomers including (meth)acrylamide, and N-substituted (meth)acrylamides such as N-methylol(meth)acrylamide; succinimide monomers such as N-(meth)acryloyloxymethylene succinimide, N-(meth)acryloyl-6-oxyhexamethylene succinimide, and N-(meth)acryloyl-8-oxyoctamethylene succinimide; cyanoacrylate monomers such as acrylonitrile and methacrylonitrile; alkyl (meth)acrylates having an alkyl group different from the principal-component alkyl (meth)acrylate described above, such as methyl (meth)acrylate and octadecyl (meth)acrylate; alicyclic acrylates such as isobornyl (meth)acrylate; vinyl acetate; N-vinylpyrrolidone; N-vinylcarboxylamide; styrene; N-vinylcaprolactam; glycidyl (meth) acrylate; tetrahydrofurfuryl (meth)acrylate; polyethylene glycol (meth)acrylate; polypropylene glycol (meth)acrylate; fluorine (meth)acrylate; silicone (meth)acrylate; 2-methoxyethyl acrylate and the like. These copolymerizable monomers can be used alone or in combination of two or more.

When a copolymerizable monomer is used in the vinyl monomer mixture or the partial polymer thereof constituting the bubble-bearing microparticle-containing polymerizable composition, the content of the vinyl monomer is preferably 50 to 99.9 wt % and that of the copolymerizable monomer 0.1 to 50 wt %, and more preferably, the content of the vinyl monomer is 60 to 99.9 wt % and that of the copolymerizable monomer 0.1 to 40 wt %. Still more preferably, the content of the vinyl monomer is 80 to 99.5 wt % and that of the copolymerizable monomer 0.5 to 20 wt %. Yet still more preferably, the content of the vinyl monomer is 90 to 99 wt % and that of the copolymerizable monomer 1 to 10 wt %.

The copolymerizable monomer for use is preferably a hydroxyl group-containing monomer or a carboxyl group-containing monomer, in particular acrylic acid. The use rate is preferably 1 to 10 wt % with respect to the total amount of the monomer components. When used in the range above, the copolymerizable monomer improves adhesive power.

Various polymerization initiators (for example, thermal polymerization initiators and photopolymerization initiator) may be added as the polymerization initiators to the bubble-bearing microparticle-containing polymerizable composition without any restriction, and photopolymerization initiators are used favorably, particularly for reduction of the polymerization period.

Since it is possible to use a curing reaction by heat or active-energy ray, if a bubble-bearing microparticle-containing polymerizable composition containing one or more polymerization initiators such as thermal polymerization initiators and photopolymerization initiators is used in preparation of the bubble-bearing microparticle-containing viscoelastic material, it is possible to form a bubble-bearing microparticle-containing viscoelastic material by curing the bubble-bearing microparticle-containing polymerizable composition in the state in which microparticles and bubbles are mixed. It is thus possible to obtain easily a bubble-bearing microparticle-containing viscoelastic material in a structure in which microparticles and bubbles are contained as stabilized. In the present invention, since a photopolymerization initiator is preferably, used as the polymerization initiator, it is preferable to prepare a bubble-bearing microparticle-containing viscoelastic material in a structure in which bubbles and microparticles are contained as stabilized, by polymerization reaction caused by active-energy ray irradiation (photocuring reaction). The polymerization initiators may be used alone or in combination of two or more.

Examples of the photopolymerization initiators for use in the bubble-bearing microparticle-containing polymerizable composition include, but are not particularly limited to, benzoin ether-based photopolymerization initiators, acetaphenane-based photopolymerization initiators, α-ketol-based photopolymerization initiators, aromatic sulfonyl chloride-basted photopolymerization initiators, photoactive oxime-based photopolymerization initiators, benzoin-based photopolymerization initiators, benzil-based photopolymerization initiators, benzophenone-based photopolymerization initiators, ketal-based photopolymerization initiators, thioxanthone-based photopolymerization initiators and the like.

Typical examples of the benzoin ether-based photopolymerization initiators include benzoin methyl ether, benzoin ethyl ether, benzoin propyl ether, benzoin isopropyl ether, benzoin isobutyl ether, 2,2-dimethoxy-1,2-diphenylethan-1-one, anisole methyl ether and the like. Examples of the acetapbenane-based photopolymerization initiators include 2,2-diethoxyacetophenone, 2,2-dimethoxy-2-phenylacetophenone, 1-hydroxycyclohexylphenylketone, 4-phenoxydichloroacetophenone, 4-t-butyl-dichloroacetophenone and the like. Examples of the α-ketol-based photopolymerization initiators include 2-methyl-2-hydroxypropiophenone, 1-[4-(2-hydroxyethyl)-phenyl]-2-hydroxy-2-methylpropan-1-one and the like. Examples of the aromatic sulfonyl chloride-based photopolymerization initiators include 2-naphthalenesulfonyl chloride and the like. Examples of the photoactive oxime-based photopolymerization initiators include 1-phenyl-1,1-propandione-2-(o-ethoxycarbonyl)-oxime and the like. Examples of the benzoin-based photopolymerization initiator include benzoin and the like. Examples of the benzil-based photopolymerization initiators include benzil and others. Examples of the benzophenone-based photopolymerization initiators include benzophenone, benzoylbenzoic acid, 3,3'-dimethyl-4-methoxybenzophenone, polyvinylbenzophenone, α-hydxoxycyclohexylphenylketone and the like. Examples of the ketal-based photopolymerization initiators include benzyldimethyl ketal and others. Examples of the thioxanthone-based photopolymerization initiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthane, 2,4-diisopropylthioxanthone, dodecylthioxanthone and the like.

The amount of the photopolymerization initiator used in the bubble-bearing microparticle-containing polymerizable composition is not particularly limited, but for example, 0.001 to 5 parts by weight (preferably 0.01 to 5 parts by

weight, more preferably, 0.05 to 3 parts by weight) with respect to 100 parts by weight of all monomer components for the vinyl monomer mixture or the partial polymer thereof contained in the bubble-bearing microparticle-containing polymerizable composition.

Examples of the thermal polymerization initiators used in the bubble-bearing microparticle-containing polymerizable composition include azo-based thermal polymerization initiators such as 2,2'-azobisisobutylonitzile, 2,2'-azobis-2-methylbutylonitrile, dimethyl 2,2'azobis(2-methylpropionate), 4,4'-azobis-4-cyanovalerianic acid, azobisisovaleronitrile, 2,2'-azobis(2-amidino propane) dihydrochloride, 2,2'-azobis[2-(5-methyl-2-imidazolin-2-yl)propane]dihydrochloride, 2,2'-azobis(2-methylpropionamidine)disulfate, and 2,2'-azobis(N,N'-dimethyleneisobutylamidine) dihydrochloride; peroxide-based thermal polymerization initiators such as dibenzoyl peroxide and tert-butyl permaleate; redox-based thermal polymerization initiators and the like. The amount of the thermal polymerization initiators used is not particularly limited, if it is in the range allowing use as thermal polymerization initiators.

Examples of microparticles contained in the bubble-bearing microparticle-containing viscoelastic material include metal particles such as of copper, nickel, aluminum, chromium, iron, and stainless steel, and metal oxide particles thereof, carbide particles such as of silicon carbide, boron carbide, and nitrogen carbide; nitride particles such as of aluminum nitride, silicon nitride, and boron nitride; ceramic particles such as of oxides of alumina and zirconium; inorganic microparticles such as of calcium carbide, aluminum hydroxide, glass, and silica; natural raw particles such as white pumiceous soil and sand; polymer particles such as of polystyrene, polymethyl methacrylate, phenol resins, benzoguanamine resins, urea resins, silicone resins, nylon, polyester, polyurethane, polyethylene, polypropylene, polyamide, and polyimide; and the like.

The microparticles contained in the bubble-bearing microparticle-containing viscoelastic material for use may be inorganic hollow microspheres (hollow inorganic microparticles) or organic hollow microspheres (hollow organic microparticles). Typical examples of the inorganic hollow microspheres include hollow balloons of glass such as hollow glass balloons; hollow metal compound balloons such as hollow alumina balloons; hollow balloons of ceramics such as hollow ceramic balloons; and the like. Examples of the organic hollow microspheres include hollow resin balloons such as hollow acrylic balloons and hollow vinylidene chloride balloons, and the like.

Examples of the hollow glass balloon commercially available include trade name: "Glass Microballoon" (manufactured by Fuji Silysia Chemical Ltd.); "CEL-STAR Z-25", "CEL-STAR Z-27", "CEL-STAR, CZ-31T", "CEL-STAR Z-36", "CEL-STAR Z-39", "CEL-STAR T-36", "CEL-STAR SX-39" and "CEL-STAR PZ-6000" (manufactured by TOKAI KOGYO Co., Ltd.); trade name: "Silax Fine Balloons" (manufactured by Fine Balloons Ltd.) and the like.

Alternatively, solid glass balloons may be used as the microparticles contained in the bubble-bearing microparticle-containing viscoelastic material. Examples of the solid glass balloons commercially available include "SUNSPHERE NP-100" (trade name, manufactured by Asahi Glass CO., LTD.); "Micro Glass Beads EMB-20" and "Glass Beads EGB-210" (trade names, manufactured by Potters-Ballotini Co., Ltd.), and the like.

Among the microparticles above, use of hollow inorganic microparticles is preferable, and use of hollow glass balloons is more preferable, for example, from the points of the polymerization efficiency with active energy ray (in particular, ultraviolet ray) and the weight of the composition. Use of the hollow glass balloons allows improvement in adhesive power at high temperature without any deterioration in other properties such as shearing force and holding power. The microparticles may be used alone or in combination of two or more. The microparticles may be subjected to various surface treatments (for example, surface treatment for reduction of surface tension for example with a silicone or fluorine compound).

The average diameter of the microparticles (average particle diameter) in the bubble-bearing microparticle-containing viscoelastic material is not particularly limited, but can be selected, for example, in the range of 1 to 500 $\mu$m (preferably 5 to 200 $\mu$m, more preferably 10 to 100 $\mu$m, still more preferably 30 to 100 $\mu$m).

The specific density (true density) of the microparticles is not particularly limited, but can be selected, for example, in the range of 0.01 to 1.8 g/cm$^3$ (preferably 0.02 to 1.5 g/cm$^3$). When the specific density of the microparticles is less than 0.01 g/cm$^3$, the microparticles may be floated significantly when the microparticles are blended and mixed with the bubble-bearing microparticle-containing polymerizable composition, inhibiting uniform dispersion of the microparticles. In addition, it often leads to problems in strength and thus to fracture of the microparticles. Alternatively, when the specific density of the microparticles is larger than 1.8 g/cm$^3$, the transmittance of active-energy ray (in particular, ultraviolet ray) through the bubble-bearing microparticle-containing polymerizable composition declines, occasionally leading to deterioration of the photocuring reaction efficiency and also, the weight of the heat-expandable removable acrylic pressure-sensitive adhesive tape increases, possibly leading to deterioration in processability. In particular, when hollow inorganic microparticles are used as the microparticles, the true density thereof is preferably 0.1 to 0.6 g/cm$^3$, and when hollow organic microparticles are used, the true density thereof is preferably 0.01 to 0.05 g/cm$^3$.

The amount of the microparticles used is not particularly limited, and can be selected for example in the range of 5 to 50 cub % (vol %), preferably 10 to 45 cub %, more preferably 15 to 40 cub %, with respect to the total volume of the bubble-bearing microparticle-containing viscoelastic material formed with the bubble-bearing microparticle-containing polymerizable composition. When the amount of the microparticles used is less than 5 cub %, the effects of adding

the microparticles is decreased, and alternatively when it is more than 50 cub %, the viscoelasticity of the bubble-bearing microparticle-containing viscoelastic material may decline.

Any multifunctional (meth)acrylate may be used in the bubble-bearing microparticle-containing polymerizable composition without any restriction, if it is a compound containing at least two (meth)acryloyl groups. The "(meth)acryloyl group" means an "acryloyl group" and/or a " methacryloyl group," and the same shall be applied to similar terms,

Examples of the multifunctional (meth)acrylates include trimethylolpropane tri(meth)acrylate, tetramethylolmethane tetraacrylate, pentaerythritol di(meth)acrylate, pentaerythritol tri(meth)acrylate, pentaerythritol tetra(meth)acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(meth)acrylate, polyethylene glycol di(meth)acrylate, hexanediol di(meth)acrylate, (poly)ethylene glycol di(meth)aciylate, (poly) propylene glycol di(meth)acrylate, neopentylglycol di(meth)acrylate, tetramethylolmethane tri(meth)acrylate, allyl (meth) acrylate, vinyl (meth)acrylate, epoxy acrylates, polyester acrylates, urethane acrylates, reactive hyperbranched polymers having multiple (meth)acrylayl groups at the terminals [e.g., trade name: "CN2300", "CN2301", and "CN2320" (manufactured by SARTOMER Company, Inc.)]) and the like. The multifunctional (meth)acrylates may be used alone or in combination of two or more.

The amount of the multifunctional (meth)acrylate used in the bubble-bearing microparticle-containing polymerizable composition is preferably controlled so that the amount of the solvent-insoluble matter of the bubble-bearing microparticle-containing viscoelastic material becomes 45 to 99 wt %, preferably 50 to 95 wt %. Thus, the amount of the solvent-insoluble matter of the heat expanding agent-containing pressure-sensitive layer is preferably 45 to 99 wt %, more preferably 50 to 99 wt %. The solvent-insoluble matter content of less than 45 wt % may make expansion separation difficult, while the solvent-insoluble content of more than 99 wt % may make the adhesive sheet less compatible and resistant to adhesion.

The solvent-insoluble matter content of the bubble-bearing microparticle-containing viscoelastic material is "the content of the solvent insoluble components" in the bubble-bearing microparticle-containing viscoelastic material and is a value determined by the following "method of measuring the solvent-insoluble matter content in the bubble-bearing microparticle-containing viscoelastic material". The solvent-insoluble matter of the bubble-bearing microparticle-containing viscoelastic material includes solvent-insoluble microparticles.

The solvent-insoluble matter content of the bubble-bearing microparticle-containing viscoelastic material is determined in the following way: Approximately 1 g of a bubble-bearing microparticle-containing viscoelastic material is collected and weighed accurately, to determine the weight of the bubble-bearing microparticle-containing viscoelastic material before immersion. Then, it is immersed in approximately 40 g of ethyl acetate at 23°C for 7 days, the ethyl acetate-insoluble matter is entirely collected and dried at 130°C for 2 hours, to give the dry weight of the insoluble matter. The content is calculated by substituting the obtained values into the following Formula:

Solvent-insoluble matter content of the bubble-bearing microparticle-containing viscoelastic material (%) = (Dry weight of insoluble matter/Weight of the bubble-bearing microparticle-containing viscoelastic material before immersion) × 100

As described above, the multifunctional (meth)acrylate in the bubble-bearing microparticle-containing polymerizable composition is used in such way that the solvent-insoluble matter content of the bubble-bearing microparticle-containing viscoelastic material is in the range above, and the typical content varies for example according to the molecular weight and the number of functional groups, but normally, it is 0.001 to 5 parts by weight, preferably 0.001 to 3 parts by weight, more preferably 0.01 to 2 parts by weight, with respect to 100 parts by weight of all monomer components for the vinyl monomer mixture or the partial polymer thereof contained in the bubble-bearing microparticle-containing polymerizable composition. For example, when the use amount is more than 5 parts by weight, the cohesive power of the bubble-bearing microparticle-containing viscoelastic material may become excessively high, leading to deterioration of the pressure-sensitive adhesive power, while when the use amount is too small (e.g., less than 0.001 part by weight), the cohesive power of the bubble-bearing miczopaiticle-containing viscoelastic material may decline.

The bubble-bearing microparticle-containing polymerizable composition is preferably, from the point of handling efficiency, adjusted to a viscosity suitable for application (normally, a viscosity, as determined by using type-B viscometer at a measurement temperature of 25°C, of 0.3 to 40 Pa·s). For the reason above, the monomer components (for example, vinyl monomer mixture, etc.) in the bubble-bearing microparticle-containing polymerizable composition may, for example,

be polymerized preliminarily to give its partial polymer. Specifically, the bubble-bearing microparticle-containing polymerizable composition may contain a partial polymer of the vinyl monomer mixture.

The polymerization rate of the partial polymer of the vinyl monomer mixture may vary according to the molecular weight of the partial polymer, but it is preferably 2 to 40 wt %, more preferably 5 to 20 wt %. The partial polymerization is normally carried out by irradiation of active-energy ray (in particular, ultraviolet ray) in the absence of oxygen.

The polymerization rate of the partial polymer is determined by weighing approximately 0.5 g of the partial polymer accurately, measuring the weight of it after it is dried at 130°C for 2 hours, thus determining the weight loss [volatile matter content (unreacted monomer weight)] and substituting the obtained values into the following Formula:

$$\text{Polymerization rate of partial polymer (\%)} = [1-(\text{weight loss})/(\text{weight of partial polymer before drying})] \times 100$$

The viscosity of the bubble-bearing microparticle-containing polymerizable composition may also be adjusted by blending with a thickening polymer. Examples of the thickening polymers include acrylic copolymers obtained from copolymerizing the alkyl (meth)acrylate above with acrylic acid, acrylamide, acrylonitrile, acryloylmorpholine or the like; styrene butadiene rubbers (SBRs); isoprene rubbers; styrene butadiene block copolymers (SBSs); ethylene-vinyl acetate copolymers; acrylic rubbers; polyurethanes; polyesters and the like. The thickening polymers may be used alone or in combination of two or more.

The blending amount of the thickening polymer is preferably 40 wt % or less (e.g., 5 to 40 wt %) with respect to the bubble-bearing microparticle-containing polymerizable composition.

The bubble-bearing microparticle-containing viscoelastic material contains bubbles. The bubbles may be contained for example in the shape, (1) as the bubbles are formed when the bubble-bearing micropazticle-containing viscoelastic material is prepared with a bubble-bearing microparticle-containing polymerizable composition previously mixed with a bubble-forming gas component (hereinafter, referred to as "bubble-forming gas"), or (2) as the bubbles are formed when the bubble-bearing microparticle-containing viscoelastic material is prepared with a expanding agent-containing microparticle-containing pressure-sensitive adhesive composition. However, in the present invention, the bubbles are normally contained in the shape of (1) in the bubble-bearing microparticle-containing viscoelastic material. The expanding agent is not particularly limited and may be selected properly, for example, from known expanding agents such as heat-expandable microspheres.

The amount of the bubbles possibly mixed in the bubble-bearing microparticle-containing viscoelastic material is not particularly limited and can be selected properly for example according to its use application. For example, the bubble content is 3 to 30 vol %, preferably 8 to 26 vol %, more preferably 13 to 22 vol %, with respect to the total volume of the bubble-bearing microparticle-containing viscoelastic material. A bubble content of less than 3 vol % may prohibit the advantageous effects of adding bubbles, while a bubble content of more than 30 vol % may lead to generation of bubbles penetrating the bubble-bearing microparticle-containing viscoelastic material and possible deterioration in viscoelastic properties and appearance.

The bubbles mixed in the bubble-bearing microparticle-containing viscoelastic material are desirably, independent bubbles, but may be a mixture of independent and semi-independent bubbles.

Such a bubble normally has a round shape (in particular, spherical shape), but may have an uneven spherical shape. The average air bubble diameter (diameter) of the bubbles is not particularly limited, but can be selected, for example, in the range of 1 to 1000 μm (preferably 10 to 500 μm, more preferably 30 to 300 μm).

The gas component contained in the bubbles (bubble-forming gas component; bubble -forming gas) is not particularly limited and may be any gas component: for example air or an inert gas such as nitrogen, carbon dioxide or argon. It is important that the bubble-forming gas does not inhibit the polymerization reaction or the like, if the reaction is carried out after mixing with the bubble-forming gas. The bubble-forming gas is preferably nitrogen, from the points of reaction inhibition and cost.

The bubble-bearing microparticle-containing polymerizable composition may contain a surfactant added for stabilized mixing of fine bubbles. The surfactant for use is, for example, a hydrocarbon-based surfactant, a silicone-based surfactant, or a fluorochemical surfactant. In particular, fluorochemical surfactants are preferable, more in particular, fluorochemical surfactants containing fluorine-based polymer having a weight-average molecular weight of 20,000 or more are preferable.

The fluorochemical surfactants containing fluorine-based polymer having a weight-average molecular weight of 20,000 or more, if used as the fluorochemical surfactant in the bubble-bearing micraparticle-containing polymerizable

composition, permits stabilized mixing of a sufficient amount of bubbles. It is probably because, as the fluorine-based polymer constituting the fluorochemical surfactant has a large weight-average molecular weight of 20,000 or more, the membrane strength of the bubbles generated becomes larger and also the mixable bubble content and bubble stability become larger, leading to inhibition of coalescence of the bubbles.

The weight-average molecular weight of the fluorine-based polymer in the fluorochemical surfactant containing the fluorine-based polymer having a weight-average molecular weight of 20,000 or more is not particularly limited, if it is 20,000 or more, but can be selected, for example, in the range of 20,000 to 100,000 (preferably 22,000 to 80,000, more preferably 24,000 to 60,000). Use of a fluorine-based polymer of fluorochemical surfactant having a weight-average molecular weight of less than 20,000 leads to deterioration in bubble mixing efficiency and stability of the mixed bubbles, decrease in the amount of mixable bubbles, and easier coalescence of the bubbles, even if mixed, during the period from bubble mixing to preparation of the bubble-bearing microparticle-containing viscoelastic material formed with the bubble-bearing microparticle-containing polymerizable composition, and consequently to reduction of the bubble content in the bubble-bearing microparticle-containing viscoelastic material and generation of bubbles (pores) penetrating the bubble-bearing microparticle-containing viscoelastic material.

The fluorine-based polymers may be used alone or in combination of two or more.

Such a fluorine-based polymer contains at least a fluorine atom-containing group-containing monomer (hereinafter, referred to as "fluorine-based monomer") as the monomer component. The fluorine-based monomers may be used alone or in combination of two or more.

Favorable examples of the fluorine-based monomers include fluorine atom-containing group-containing vinyl monomers. The fluorine atom-containing group in such a fluorine atom-containing group-containing vinyl monomer is preferably a perfluoro group, which may be monovalent or polyvalent of bivalent or higher. Favorable examples of the monovalent fluorine atom-containing groups (in particular, perfluoro groups) include perfluoroalkyl groups (e.g., $CF_3CF_2$ group, or $CF_3CF_2CF_2$ group). The perfluoroalkyl group may be bonded to the vinyl monomer via another group (e.g., -O- group, -OCO- group, or alkylene group). Specifically, the monovalent fluorine atom-containing group may be a perfluoroether group (perfluoroalkyl-oxy group, or the like) or a perfluoroester group (perfluoroalkyl-oxycarbonyl group, perfluoroalkyl-carbonyloxy group, or the like). Examples of the perfluoroether groups include $CF_3CF_2O$ group, $CF_3CF_2CF_2O$ group and the like. Examples of the perfluoroester groups include $CF_3CF_2OCO$ group, $CF_3CF_2CF_2OCO$ group, $CF_3CF_2COO$ group, $CF_3CF_2CF_2COO$ group and the like.

The bivalent fluorine atom-containing group in the bivalent or higher fluorine atom-containing groups is, for example, a perfluoroalkylene group corresponding to the perfluoroalkyl group above (e.g., tetrafluoroethylene group or hexafluoropropylene group) or the like. Similarly to the perfluoroalkyl group above, the perfluoroalkylene group may be bonded to the main chain via another group (e.g., -O- group, -OCO- group or an alkylene group), and may be for example in the shape of a perfluoroalkylene-oxy group such as tetrafluoraethylene-oxy group or hexafluoropropylene-oxy group, or a perfluoroalkylene-oxycarbonyl group such as tetrafluoraethylene-oxycarbonyl group or hexafluoropropylene-oxycarbonyl group.

In a fluorine atom-containing group such as the perfluoro group (e.g., perfluoroalkyl group or perfluoroalkylene group), the number of the carbon atoms in the perfluoro group region is not particularly limited and, for example, 1 or 2 or more (preferably 3 to 30, more preferably 4 to 20).

The fluorine atom-containing group-containing vinyl monomer is particularly preferably a fluorine atom-containing group-containing (meth)acrylic ester. The fluorine atom-containing group-containing (meth)acrylic ester is preferably, for example, a perfluoroalkyl (meth)acrylate. Examples of the perfluoroalkyl (meth)acrylates include perfluoro $C_{1-20}$ alkyl (meth)acrylates such as perfluoromethyl (meth)acrylate, perfluoroethyl (meth)acrylate, perfluoropropyl (meth) acrylate, perfluoroisopropyl (meth)acrylate, perfluorobutyl (meth)acrylate, perfluoroisobutyl (meth)acrylate,perfluoro-s-butyl (meth)acrylate, perfluoro-t-butyl (meth)acrylate, perfluoropentyl (meth)acrylate, perfluorohexyl (meth)acrylate, perfluoroheptyl (meth)acrylate, and perfluorooctyl (meth)acrylate, and the like.

In the fluorine-based polymers, a monomer component copolymerizable with the fluorine-based monomer (hereinafter, referred to as "non-fluorine-based monomer") may be used as a monomer component with the fluorine-based monomer. The non-fluorine-based monomers may be used alone or in combination of two or more.

For example, when the fluorine-based monomer is a fluorine atom-containing group-containing vinyl monomer [in particular, a fluorine atom-containing group-containing (meth)acrylic ester], a (meth)acrylic ester can be used favorably as the non-fluorine-based monomer, and in particular, an alkyl (meth)acrylate is preferable. Examples of the alkyl (meth) acrylates include $C_{1-20}$ alkyl (meth)acrylates [preferably, $C_{4-18}$ alkyl (meth)acrylates] such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth) acrylate, nonadecyl (meth)acrylate, and eicosyl (meth)acrylate, and the like.

Examples of the (meth)acrylic esters other than the alkyl (meth)acrylates include alicyclic hydrocarbon group-containing (meth)acrylates such as cyclopentyl (meth)acrylate, cyclohexyl (meth)acrylate, and isobornyl (meth)acrylate; aromatic hydrocarbon group-containing (meth)acrylates such as phenyl (meth)acrylate; and the like.

Examples of the non-fluorine-based monomers include carboxyl group-containing monomers such as (meth) acrylic acid, itaconic acid, maleic acid, fumaric acid, crotonic acid, and isocrotonic acid, or the anhydrides thereof sulfonic acid group-containing monomers such as sodium vinylsulfonate; aromatic vinyl compounds such as styrene and vinyltoluene; cyano group-containing monomers such as acrylonitrile and methacrylonitrile; olefins or dienes such as ethylene, butadiene, isoprene and isobutylene; vinyl esters such as vinyl acetate; vinyl ethers such as vinyl alkylethers; vinyl chloride; amide group-containing monomers such as acrylamide, methacrylamide, N-vinylpyrrolidone, N,N-dimethyl (meth)acrylamide, N-methylol(meth)acrylamide, N-methoxymethyl(meth)acrylamide, and N-butoxymethyl(meth)acrylamide; hydroxyl group-containing monomers including hydroxyalkyl (meth)acrylates such as hydroxyethyl (meth)acrylate, hydroxypropyl (moth)acrylate, and hydroxybutyl (meth)acrylate; amino-group-containing monomers such as aminoethyl (meth)acrylate, dimethylaminoethyl (meth)acrylate, t-butylaminoethyl (meth)acrylate, and (meth)acryloylmorpholine; imide group-containing monomers such as cyclohexylmaleimide and isopropylmaleimide; glycidyl group-containing monomers such as glycidyl (meth)acrylate and methylglycidyl (meth)acrylate; isocyanate group-containing monomers such as 2-methacryloyloxyethyl isocyanate and the like. Examples of the other non-fluorine-based monomers include polyfunctional copolymerizable monomers (multifunctional monomers) such as triethylene glycol di(meth)acrylate, diethylene glycol di(meth)acrylate, ethylene glycol di(meth)acrylate, tetraethylene glycol di(meth)acrylate, neopentylglycol di(meth) acrylate, 1,6-hexanediol di(meth)acrylate, trimethylolpropane tri(meth)acrylate, pentaerythritol tri(meth)acrylate, dipentaerythritol hexa(meth)acrylate, and divinylbenzene.

In the present invention, a fluorochemical surfactant containing a fluorine-based polymer having at least a fluorine atom-containing group-containing vinyl monomer [in particular, fluorine atom-containing group-containing (meth) acrylic ester] as the monomer component is favorable as the fluorochemical surfactant, and in particular, a fluorochemical surfactant containing a fluorine-based polymer having at least a fluorine atom-containing group-containing vinyl monomer [in particular, fluorine atom-containing group-containing (meth)acrylic ester] and a (meth)acrylic ester [in particular, alkyl (meth)acrylate ester] as the monomer components can be used favorably as the fluorochemical surfactant. The content of the fluorine atom-containing group-containing vinyl monomer [in particular, fluorine atom-containing group-containing (meth)acrylic ester] in such a fluorine-based polymer constituting the fluorochemical surfactant is not particularly limited and can be selected properly depending on the desired properties of the surfactant.

Typical examples of the fluorochemical surfactants include "EFTOP EF-352" (manufactured by Jemco Co., Ltd), "EFTOP EF-801" (manufactured by JEMCO Inc.), "UNIDYNE G-656" (manufactured by Daikin Industries, Ltd.) and the like.

The amount (solid matter) of the fluorochemical surfactant used is not particularly limited, but for example, can be selected in the range of 0.01 to 2 parts by weight (preferably 0.03 to 1.5 parts by weight, more preferably 0.05 to 1 part by weight), with respect to 100 parts by weight of all monomer components for the vinyl monomer mixture or the partial polymer thereof contained in the bubble-bearing microparticle-containing polymerizable composition. When it is less than 0.01 part by weight with respect to 100 parts by weight of all monomer components for the vinyl monomer mixture or the partial polymer thereof contained in the bubble-bearing microparticle-containing polymerizable composition, the bubble mixing efficiency may decline, making it difficult to mix a sufficient amount of bubbles in the microparticle-containing polymerizable composition, while when it is more than 2 parts by weight, adhesion performance declines.

For stabilized mixing and presence of bubbles in the bubble-bearing microparticle-containing polymerizable composition, which is used for preparation of the bubble-bearing miczoparticle-containing viscoelastic material, it is preferable to blend and mix the bubbles as the last component added in the bubble-bearing microparticle-containing polymerizable composition, and in particular, it is preferable to raise the viscosity of the bubble-bearing microparticle-containing polymerizable composition before mixing with bubbles (hereinafter, referred to as "bubble-bearing microparticle-containing viscoelastic precursor"). The viscosity of the bubble-beaning microparticle-containing viscoelastic precursor is not particularly limited, if it is a viscosity allowing stabilized preservation of the mixed bubbles firmly. For example, viscosity, as determined by using a BH viscometer as the viscometer under the condition of a rotor of No.5 rotor, a rotational frequency of 10 rpm, and a measurement temperature of 30°C, is desirably 5 to 50 Pa·s (preferably 10 to 40 Pa·s). When the viscosity of the bubble-bearing micioparticle-containing viscoelastic precursor (BH viscometer, No.5 rotor, 10 rpm, 30°C) is less than 5 Pa·s, the viscosity is too low and the mixed bubbles may be removed soon by coalescence, while when it is more than 50 Pa·s, the viscoelastic precursor may be too viscous, making it difficult to produce the bubble-bearing microparticle-containing viscoelastic material containing bubbles.

The viscosity of the bubble-bearing microparticle-containing viscoelastic precursor can be adjusted, for example, by a method of blending various polymer components such as acrylic rubber, thickening additives and others, or by a method of partially polymerizing the monomer components (e.g., vinyl monomer mixture). Specifically, it is possible to prepare a bubble-bearing microparticle-containing viscoelastic precursor having a favorable viscosity allowing stabilized preservation of bubbles, for example, by preparing a monomer mixture by mixing vinyl monomers together with polymerization initiators (e.g., photopolymerization initiator), polymerizing the monomer mixture according to the kind of the polymerization initiator used, and thus, preparing a composition (sirup) in which only part of the monomer components are polymerized, or by blending the sirup with a fluorochemical surfactant containing a fluorine-based polymer having a weight-average molecular weight of 20,000 or more and, as needed, microparticles and various additives. In preparation, the fluorochemical surfactant containing a fluorine-based polymer having a weight-average molecular weight of 20,000 or more and the microparticles and various additive used as needed may be blended previously to the vinyl monomer mixture.

The method of mixing bubbles is not particularly limited, and any known bubble mixing method may be used. An example of such an apparatus is an apparatus equipped with a stator having many small gears on a disk with a through-hole at the center thereof, and a rotor having many small gears similar to those of the stator on a disk, which faces to the stator. In the apparatus, it is possible to obtain a bubble-bearing micioparticle-containing polymerizable composition, in which the bubble-forming gas is dispersed and mixed as fine bubbles in the bubble-bearing microparticle-containing viscoelastic precursor, by introducing a bubble-bearing microparticle-containing viscoelastic precursor into the space between the gears of the stator and the gears of the rotor and introducing a gas component for forming bubbles (bubble-forming gas) through the through-hole into the bubble-bearing microparticle-containing viscoelastic precursor, while the rotor is rotated at high speed.

It is preferable for suppression or prevention of the coalescence of bubbles to carry out the steps of from bubble mixing to formation of the bubble-bearing microparticle-containing viscoelastic material continuously as a series of steps. Thus, it is preferable to prepare a bubble-bearing microparticle-containing polymerizable composition by mixing bubbles as described above and then to form a bubble-bearing microparticle-containing viscoelastic material by using the bubble-bearing microparticle-containing polymerizable composition, for example according to the following base material forming method.

Such a bubble-bearing miczoparticle-containing polymerizable composition, which is resistant to coalescence of bubbles and preserves a sufficient amount of bubble as stabilized, can be used favorably as a composition for a substrate mixed with bubbles in the pressure-sensitive adhesive tape or sheet (bubble-bearing microparticle-containing viscoelastic material, bubble-bearing microparticle-containing viscoelastic substrate), as the components constituting the bubble-bearing microparticle-containing polymerizable composition (e.g., the vinyl monomer mixture or the partial polymer thereof, photopolymerization initiator, microparticles, multifunctional (meth)acrylate, additive and others) are selected properly.

The bubble-bearing microparticle-containing polymerizable composition forming the bubble-bearing microparticle-containing viscoelastic material may contain, in addition the components above, other additives favorable depending on applications. Examples of the additives include crosslinking agents (e.g., polyisocyanate-based crosslinking agents, silicone-based crosslinking agents, epoxy-based crosslinking agents, alkyl-etherified melamine-based crosslinking agents), tackifiers (e.g., rosin-derived resins, polyterpene resins, petroleum resins, oil-soluble phenol resins that are solid, semisolid, or liquid at room temperature), plasticizers, fillers, aging inhibitors, antioxidants, colorants (pigments, dyes and others), softeners and the like.

The method of producing the bubble-bearing microparticle-containing viscoelastic material is not particularly limited, but the bubble-bearing microparticle-containing viscoelastic material is formed, for example, by coating a bubble-bearing microparticle-containing polymerizable composition on a suitable substrate such as release film or base material, thus forming a bubble-beazing microparticle-containing polymerizable composition layer and drying and curing (by heat or active-energy ray) the layer, as needed. Since the photopolymerization reaction is inhibited by oxygen in air, it is preferable to block oxygen for example during curing (photocuring) with active-energy ray by bonding a suitable substrate such as release film or base material to the layer or by performing photocuring under nitrogen atmosphere. The suitable substrate used in production of the bubble-bearing microparticle-containing viscoelastic material may be separated during preparation of the heat-expandable removable acrylic pressure-sensitive adhesive tape according to the present invention at a suitable time or during use of the heat-expandable removable acrylic pressure-sensitive adhesive tape after preparation.

The thickness of the bubble-bearing microparticle-containing viscoelastic material is not particularly limited, but normally 100 μm or more (e.g., 100 to 1500 μm), preferably 200 μm or more (e.g., 200 to 1400 μm), more preferably 300 μm or more (e.g., 300 μm to 1300 μm) for assurance of favorable adhesive power. The bubble-bearing microparticle-containing viscoelastic material may have a single- or multi-layered configuration.

(Release film)

The release film is used in preparation of the heat-expandable removable acrylic pressure-sensitive adhesive tape or as a protective material for the adhesive or other surface during the period after preparation and before use. The release film may not be always formed in preparation of the heat-expandable removable acrylic pressure-sensitive adhesive tape, but because the photopolymerization reaction is inhibited by oxygen and the like in air, it is preferable to

coat the surface with a release film and prevent contact of the surface with oxygen. The release film is normally removed before use of the heat-expandable removable acrylic pressure-sensitive adhesive tape.

Release film is not particularly limited, if it blocks oxygen and is transmits light, and examples thereof include the base materials release-coated (releasably-treated) at least on one surface with a release-coating agent (release agent); low-adhesiveness base materials of a fluorine-based polymers (e.g., polytetrafluoroethylene, polychloro-trifluoroethylene, polyvinyl fluoride, polyvinylidene fluoride, tetrafluoroethylene-hexafluoropropylene copolymer, or chlorofluoroethylene-vinylidene fluoride copolymer); low-adhesiveness base materials of a non-polar polymer (e.g., an olefinic resin such as polyethylene or polypropylene) and the like. In the case of a low-adhesiveness base material, both faces can be used as the release surfaces, while in the case of a release-coated base material, the release-coated surface can be used as the release surface.

Examples of the base films in the release-coated (releasably-treated) base films at least on one face which are used as the release films include plastic base films (synthetic resin films) including polyester films such as polyethylene terephthalate film; olefinic resin films such as polyethylene film and polypropylene film; polyvinyl chloride films; polyimide films; polyamide films such as nylon film; rayon film and the like. Alternatively, paper base materials (base materials of paper such as woodfree paper, Japanese paper, kraft paper, glassine paper, synthetic paper or topcoat paper) may be used. In particular, polyester films such as polyethylene terephthalate film are used preferably.

The release-coating agent (release agent) is, for example, a silicone-based release-coating agent, a fluorine-based release-coating agent, a long-chain alkyl-based release-coating agent or the like, although it is not particularly limited thereto. The release-coating agents may be used alone or in combination of two or more. The release film is prepared, for example, by a traditionally known method.

The thickness of the release film is not particularly limited as long as it blocks oxygen and transmits light. In addition, the release film may be in the configuration of a single layer or multiple layers.

The heat-expandable removable acrylic pressure-sensitive adhesive tape according to the present invention may be in the configuration of a pressure-sensitive adhesive layer being formed on or above at least one face of a base material other than the bubble-bearing microparticle-containing viscoelastic material, for example in the configuration of the heat expanding agent-containing pressure-sensitive adhesive layer being formed on or above one face of the base material. The base material for used is a plastic film or sheet, although it is not particularly limited thereto, and typical examples thereof are various materials including polyolefins such as low-density polyethylene, linear polyethylene, medium-density polyethylene, high-density polyethylene, ultzalow-density polyethylene, random copolymerization polypropylene, block copolymerization polypropylene, homopolypropylene, polybutene and polymethylpentene; ethylene-vinyl acetate copolymers, ionomer resins, ethylene-(meth)acrylic acid copolymers, ethylene-(meth)acrylic ester (random or alternating) copolymers, ethylene-butene copolymers, ethylene-hexene copolymers, polyurethane, polyesters such as polyethylene terephthalate, polyimide, polyether ether ketone, polyvinyl chloride, polyvinylidene chloride, fluoroplastics, cellulosic resins, and the crosslinked derivatives thereof, thermosetting resins, paper, fabrics, nonwoven fabrics, metal foils, plastic laminates thereof, laminated film of plastics and the like. The thickness of the base material is also not particularly limited, but preferably, less than 500 μm, more preferably about 1 to 300 μm, particularly preferably 5 to 250 μm, in light of the processability during separation of the heat-expandable removable acrylic pressure-sensitive adhesive tape.

[Method of producing heat-expandable removable acrylic pressure-sensitive adhesive tape]

Hereinafter, the method of producing a heat-expandable removable acrylic pressure-sensitive adhesive tape having a heat expanding agent-containing pressure-sensitive adhesive layer at least on or above one face of a bubble-bearing microparticle-containing viscoelastic material will be described in detail with reference to drawings, as needed. Preparation step examples (respectively, preparation step examples 1 to 3) in production of a heat-expandable removable acrylic pressure-sensitive adhesive tape are shown in Figures 1, 2, and 3, but the method of producing the heat-expandable removable acrylic pressure-sensitive adhesive tape is not limited to these preparation step examples.

Figure 1 is a schematic sectional view illustrating an example of the preparation step for the heat-expandable removable acrylic pressure-sensitive adhesive tape according to the present invention, and

Figures 2 and 3 are schematic sectional views illustrating other examples of the preparation steps for the heat-expandable removable acrylic pressure-sensitive adhesive tape according to the present invention. In

Figures 1 to 3, 11 represents a bubble-bearing microparticle-containing polymerizable composition layer; 12 represents a heat expanding agent-containing pressure-sensitive adhesive composition layer; 13 represents a release film; 14 represents a heat expanding agent-containing pressure-sensitive adhesive layer; 15 represents a bubble-bearing microparticle-containing viscoelastic material; 16 represents active-energy ray; 17 represents a heat-expandable removable acrylic pressure-sensitive adhesive tape (one side type); and 18 represents a heat-expandable

removable acrylic pressure-sensitive adhesive tape (both faces type).

(Example 1 of the preparation step for heat-expandable removable acrylic pressure-sensitive adhesive tape)

The first step of the preparation step example 1 is a step of forming a bubble-bearing microparticle-containing polymerizable composition layer 11, by coating a bubble-bearing microparticle-containing polymerizable composition on the release-coated face of a release film 13. A sheet having a bubble-bearing microparticle-containing polymerizable composition layer 11 formed on the release-coated face of release film 13 is prepared in the step. 1a shows the first step in the preparation step example 1.
The second step in preparation step example 1 is a step of forming a heat expanding agent-containing pressure-sensitive adhesive composition layer 12 by coating a heat expanding agent-containing pressure-sensitive adhesive composition on the release-coated face of release film 13. A sheet having a heat expanding agent-containing pressure-sensitive adhesive composition layer 12 formed on the release-coated face of release film 13 is prepared in the step. 1b shows the second step of preparation step example 1.
The third step of preparation step example 1 is a step of bonding the sheet prepared in the first step to the sheet prepared in the second step, as the bubble-bearing microparticle-containing polymerizable composition layer 11 is in contact with the heat expanding agent-containing pressure-sensitive adhesive composition layer 12. A laminated film having a release film 13 via the heat expanding agent-containing pressure-sensitive adhesive composition layer 12 on one face of the bubble-bearing microparticle-containing polymerizable composition layer 11 and a release film 13 on the other face of the bubble-bearing microparticle-containing polymerizable composition layer 11 is prepared in the step. 1c shows the third step of preparation step example 1.
The fourth step of preparation step example 1 is a step of irradiating the laminated film prepared in the third step with active-energy ray 16 from both faces via the release film 13. The bubble-hearing microparticle-containing polymerizable composition layer 11 and the heat expanding agent-containing pressure-sensitive adhesive composition layer 12 are photocured, to give respectively a bubble-bearing microparticle-containing viscoelastic material 15 and a heat expanding agent-containing pressure-sensitive adhesive layer 14 in the step. In the laminated film above, the bubble-bearing microparticle-containing polymerizable composition layer 11 and the heat expanding agent-containing pressure-sensitive adhesive composition layer 12 are blocked from oxygen by a release film 13. 1d shows the fourth step of preparation step example 1.
1e shows the heat-expandable removable acrylic pressure-sensitive adhesive tape prepared in preparation step example 1. The heat-expandable removable acrylic pressure-sensitive adhesive tape 17 is a single-sided base material-carrying adhesive sheet having a heat expanding agent-containing pressure-sensitive adhesive layer 14 on one face of the bubble-bearing microparticle-containing viscoelastic material 15. In the heat-expandable removable acrylic pressure-sensitive adhesive tape 17, the bubble-bearing microparticle-containing viscoelastic material 15 and the heat expanding agent-containing pressure-sensitive adhesive layer 14 are protected by the release films 13.

(Example 2 of the preparation step for heat-expandable removable acrylic pressure-sensitive adhesive tape)

The first step of preparation step example 2 is a step of forming a heat expanding agent-containing pressure-sensitive adhesive composition layer 12 by coating a heat expanding agent-containing pressure-sensitive adhesive composition on the release-coated face of release film 13. A sheet having a heat expanding agent-containing pressure-sensitive adhesive composition layer 12 formed on the release-coated face of release film 13 is prepared in the step. 2a shows the first step of preparation step example 2.
The second step of preparation step example 2 is a step of forming a heat expanding agent-containing pressure-sensitive adhesive composition layer 12 by coating a heat expanding agent-containing pressure-sensitive adhesive composition on the release-coated face of release films 13, and additionally, laminating a bubble-bearing microparticle-containing polymerizable composition layer 11 onto the heat expanding agent-containing pressure-sensitive adhesive composition layer 12. The lamination of the bubble-bearing microparticle-containing polymerizable composition layer 11 may be carried out by forming a microparticle-containing polymerizable composition layer 11 by coating a bubble-bearing microparticle-containing polymerizable composition on the heat expanding agent-containing pressure-sensitive adhesive composition layer 12 or by transferring a bubble-bearing microparticle-containing polymerizable composition layer 11 formed for example on a suitable release film (separator) onto the heat expanding agent-containing pressure-sensitive adhesive composition layer 12. A laminate film having a heat expanding agent-containing pressure-sensitive adhesive composition layer 12 on the release-coated face of release film 13 and additionally a bubble-bearing microparticle-containing polymerizable composition layer 11 formed on the heat expanding agent-containing pressure-sensitive adhesive composition layer 12 is prepared in the step. 2b shows the second step of preparation step example 2.
The third step of preparation step example 2 is a step of bonding the sheet prepared in the first step to the laminate film prepared in the second step, as the heat expanding agent-containing pressure-sensitive adhesive composition layer 12 and the bubble-bearing microparticle-containing polymerizable composition layer 11 are in contact with each other. In the step, a laminated film having a heat expanding agent-containing piessure-sensitive adhesive composition layer 12 on each of both faces of bubble-bearing microparticle-containing polymerizable composition layer 11 and additionally a release film 13 on each surface of the both heat expanding agent-containing pressure-sensitive adhesive composition layers 12 is prepared. 2c shows the third step of preparation step example 2.

The fourth step of preparation step example 2 is a step of irradiating the laminate film prepared in the third step with active-energy ray 16 from both faces via the release film 13. The bubble-bearing microparticle-containing polymerizable composition layer 11 and the heat expanding agent-containing pressure-sensitive adhesive composition layer 12 are photocured, to give respectively a bubble-bearing microparticle-containing viscoelastic material 15 and a heat expanding agent-containing pressure-sensitive adhesive layer 14 in the step. In the laminated film, the heat expanding agent-containing pressure-sensitive adhesive composition layer 12 is blocked from oxygen by the release films 13. 2d shows the fourth step of preparation step example 2.

2e shows the heat-expandable removable acrylic pressure-sensitive adhesive tape prepared in the preparation step example 2. The heat-expandable removable acrylic pressure-sensitive adhesive tape 18 is a double-sided base material-carrying adhesive sheet having a heat expanding agent-containing pressure-sensitive adhesive layer 14 on each of both faces of the bubble-bearing microparticle-containing viscoelastic material 15.

(Example 3 of the preparation step for heat-expandable removable acrylic pressure-sensitive adhesive tape)

The first step of preparation step example 3 is a step of forming a heat expanding agent-containing pressure-sensitive adhesive composition layer 12 by coating a heat expanding agent-containing pressure-sensitive adhesive composition on the release-coated face of release film 13. A sheet having a heat expanding agent-containing pressure-sensitive adhesive composition layer 12 formed on the release-coated face of release film 13 is prepared in the step. 3a shows the first step of preparation step example 3.

The second step of preparation step example 3 is a step of laminating a bubble-bearing microparticle-containing polymerizable composition layer 11 onto the heat expanding agent-containing pressure-sensitive adhesive composition layer 12 of the sheet prepared in the first step. The bubble-bearing microparticle-containing polymerizable composition layer 11 may be laminated, by forming a bubble-bearing microparticle-containing polymerizable composition layer 11 by coating a bubble-bearing microparticle-containing polymerizable composition on the heat expanding agent-containing pressure-sensitive adhesive composition layer 12 or by transferring a bubble-bearing microparticle-containing polymerizable composition layer 11 formed on a suitable release film (separator) onto the heat expanding agent-containing pressure-sensitive adhesive composition layer 12. A laminate having a heat expanding agent-containing pressure-sensitive adhesive composition layer 12 on the release-coated face of release film 13 and additionally a bubble-bearing microparticle-containing polymerizable composition layer 11 on the heat expanding agent-containing pressure-sensitive adhesive composition layer 12 is prepared in the step. 3b shows the second step of preparation step example 3.

The third step of preparation step example 3 is a step of laminating a heat expanding agent-containing pressure-sensitive adhesive composition layer 12 onto the bubble-bearing microparticle-containing polymerizable composition layer 11 of the laminate film prepared in the second step. The heat expanding agent-containing pressure-sensitive adhesive composition layer 12 may be laminated by forming a heat expanding agent-containing pressure-sensitive adhesive composition layer 12 by coating a heat expanding agent-containing pressure-sensitive adhesive composition on the bubble-bearing microparticle-containing polymerizable composition layer 11 or by transferring a heat expanding agent-containing pressure-sensitive adhesive composition layer 12 formed on a suitable release film (separator) onto the bubble-bearing microparticle-containing polymerizable composition layer 11. A laminated film having a heat expanding agent-containing pressure-sensitive adhesive composition layer 12 on each of both faces of the bubble-bearing microparticle-containing polymerizable composition layer 11 and additionally a release film 13 on one heat expanding agent-containing pressure-sensitive adhesive composition layer 12 is prepared in the step. 3c shows the final step of preparation step example 3.

The fourth step of preparation step example 3 is a step of bonding a release film 13 onto the heat expanding agent-containing pressure-sensitive adhesive composition layer 12 without the release film of the laminate film prepared in the third step as the release-coated face of the release film 13 being in contact with the heat expanding agent-containing pressute-sensitive adhesive composition layer 12 and then irradiating the laminated film with active-energy ray 16 from both faces via a release film 13. The bubble-bearing microparticle-containing polymerizable composition layer 11 and the heat expanding agent-containing pressure-sensitive adhesive composition layer 12 are photocured, respectively giving a bubble-bearing microparticle-containing viscoelastic material 15 and a heat expanding agent-containing pressure-sensitive adhesive layer 14 in the step. In the laminated film above, the heat expanding agent-containing pressure-sensitive adhesive composition layer 12 is blocked from oxygen by the release film 13. 3d shows the fourth step of preparation step example 3.

3e shows the heat-expandable removable acrylic pressure-sensitive adhesive tape prepared in preparation

step example 3. The heat-expandable removable acrylic pressure-sensitive adhesive tape 18 is a double-faced base material-carrying adhesive sheet having a heat expanding agent-containing pressure-sensitive adhesive layer 14 on each of both faces of a bubble-bearing microparticle-containing viscoelastic material 15.

Here, in each preparation step example, the coating method used in coating a bubble-bearing microparticle-containing polymerizable composition or a heat expanding agent-containing pressure-sensitive adhesive composition for example on a release film 13 is not particularly limited and any common method may be used. Examples of the coating methods include slot die method, reverse gravure coating method, micro gravure method, dip method, spin coating method, brushing method, roll coating method, flexographic printing method and the like. A commonly-used coating machine may be used as the coating machine for use in coating without any particular restriction. Examples of the coating machines include roll coaters such as reverse coater and gravure coater; curtain coaters; lip coaters; die coaters; knife coaters and the like.

Oxygen is blocked with a release film 13 in each preparation step example in the steps of photocuring a bubble-bearing microparticle-containing polymerizable composition layer 11 and a heat expanding agent-containing pressure-sensitive adhesive composition layer 12 by using active-energy ray, but in methods using no release film 13, inert gas such as nitrogen gas may be used, replacing the release film 13. Thus, it is possible to control the inhibition of photopolymerization reaction by oxygen by irradiating active-energy ray in an inert gas atmosphere such as nitrogen gas. If the bubble-bearing microparticle-containing polymerizable composition layer 11 and the heat expanding agent-containing pressure-sensitive adhesive composition layer 12 are photocured by using active-energy ray in an inert gas atmosphere such as nitrogen gas, the bubble-bearing microparticle-containing polymerizable composition layer 11 and the heat expanding agent-containing pressure-sensitive adhesive composition layer 12 may not be covered with a release film 13.

If the bubble-bearing microparticle-containing polymerizable composition layer 11 and the heat expanding agent-containing pressure-sensitive adhesive composition layer 12 are photocured by using active-energy ray in an inert gas atmosphere such as nitrogen gas, oxygen is desirably present in an amount of as less as possible in the inert gas atmosphere and, for example, the oxygen concentration is preferably 5,000 ppm or less. If oxygen dissolved in the bubble-bearing microparticle-containing polymerizable composition layer 11 and the heat expanding agent-containing pressure-sensitive adhesive composition layer 12 is significant, the oxygen may suppress the amount of radicals generated, prohibiting sufficient progress of polymerization reaction and exerting adverse effects on the polymerization rate, molecular weight, and molecular weight distribution of the polymer obtained.

Examples of the active-energy ray include ionizing radiation rays such as $\alpha$ ray, $\beta$ rays, $\gamma$ ray, neutron beam, and electron beam; ultraviolet ray; and the like, and in particular, ultraviolet ray is preferable. For example, the irradiation energy and the exposure period of the active energy ray are not particularly limited as long as they are suitable for activation of the photopolymerization initiator and induction of the reaction between monomer components. The irradiation intensity of the active-energy ray is, for example, a ultraviolet intensity of approximately 400 to 4000 mJ/$cm^2$ corresponding to an illuminance of 1 to 200 mW/$cm^2$ at a wavelength of 300 to 400 nm.

If the bubble-bearing microparticle-containing polymerizable composition layer 11 and the heat expanding agent-containing pressure-sensitive adhesive composition layer 12 are photocured by using active-energy ray, the polymerization rate is preferably 90 wt % or more. The unreacted monomers can be removed in a drying step separately installed. The polymerization rate can be calculated by a method similar to that described above for determination of the polymerization rate of partial polymer.

A light source having a spectral distribution at a wavelength region of 180 to 460 nm (preferably 300 to 400 nm) is used for irradiation of ultraviolet ray, and a common irradiation apparatus such as chemical lamp, black light (manufactured by TOSHIBA LIGHTING & TECHNOLOGY CORPORATION.), mercury arc,carbon arc, low-pressure mercury lamp, medium-pressure mercury lamp, high-pressure mercury lamp, ultrahigh-pressure mercury lamp or metal halide lamp is used. An irradiation apparatus that can emit electromagnetic radiation ray having a wavelength shorter or longer than the wavelength above may be used.

The illuminance of the ultraviolet ray can be adjusted to a desired one, for example, by modification of the distance between the irradiation apparatus as a light source and the photocuring composition: bubble-bearing microparticle-cantaining polymerizable composition layer 11 or heat expanding agent-containing pressure-sensitive adhesive composition layer 12, or the voltage applied to the irradiation apparatus.

The adherend to which the heat-expandable removable acrylic pressure-sensitive adhesive tape is bonded is not particularly limited, and an adherend in a suitable shape and of a suitable raw material is used. Examples of raw material of the adherend include various resins such as polycarbonate, polypropylene, polyester, polystyrene, phenol resins, epoxy resins, polyurethane, ABS, and acrylic resins; various metals such as iron, aluminum, copper, nickel, and the alloys thereof; and the like.

If the heat-expandable removable acrylic pressure-sensitive adhesive tape according to the present invention particularly has a bubble-bearing microparticle-containing viscoelastic material, the heat-expandable removable acrylic pressure-sensitive adhesive tape according to the present invention is sufficiently compatible with an adherend having an irregular surface with a level difference of 0 to 500 $\mu$m (preferably 0 to 300 $\mu$m). It is because the heat-expandable

removable acrylic pressure-sensitive adhesive tape has improved level difference-absorbing efficiency when the bubble-bearing microparticle-containing viscoelastic material in the heat-expandable removable acrylic pressure-sensitive adhesive tape contains bubbles. Thus, in this case, the heat-expandable removable acrylic pressure-sensitive adhesive tape according to the present invention shows high normal-state adhesive power to an adherend having a level-difference structure.

The normal-state adhesive power (tackiness) of the heat-expandable removable acrylic pressure-sensitive adhesive tape can be adjusted, as the components for the heat expanding agent-containing pressure-sensitive adhesive layer, the kind and amount of the heat expanding agent used, the active-energy ray irradiation method in production of the heat expanding agent-containing pressure-sensitive adhesive layer, the thickness of the heat expanding agent-containing pressure-sensitive adhesive layer, the amount of microparticles in the bubble-bearing microparticle-containing viscoelastic material and the like are selected properly.

A typical example of the method of adjusting the normal-state adhesive power by proper selection of the active-energy ray irradiation method in production of the pressure-sensitive adhesive layer is, for example, the method disclosed in Japanese Unexamined Patent Publication No. 2003-13015. Japanese Unexamined Patent Publication No. 2003-13015 discloses a method of dividing the active-energy ray irradiation into multiple phases and thus adjusting the tackiness more accurately. Specifically, for example, when ultraviolet ray is used as the active-energy ray, ultraviolet ray irradiation may be performed for example in two phases: a first phase where photoirradiation is preformed at a illuminance 30 $mW/cm^2$ or more and a second phase where photoirradiation is performed at lower illuminance to substantial completion of the polymerization reaction; or in three phases: a first phase where ultraviolet ray irradiation is performed at an illuminance of 30 $mW/cm^2$ or more, a second phase wherein photoirradiation is performed at lower illuminance to a polymerization rate of at least 70%, and a third phase where phatoirradiation is performed at an illuminance of 30 $mW/cm^2$ or more to substantial completion of the polymerization reaction.

The ultraviolet ray irradiation apparatus used in the first phase is for example a low-pressure mercury lamp, a high-pressure mercury lamp, an ultrahigh-pressure mercury lamp, a metal halide lamp or the like, and that used in the second phase is, for example, a chemical lamp, a black light or the like.

The heat-expandable removable acrylic pressure-sensitive adhesive tape according to the present invention, by setting the adhesive power in the range above, it shows high normal-state adhesive power to the adherend when bonded and permits easy separation when the bonded region is separated and disassembled, as the adhesive power declines by heating. Additionally, when the base material contains bubbles, the heat-expandable removable acrylic pressure-sensitive adhesive tape has favorable level diffezence-absorbing efficiency.

The heat-expandable removable acrylic pressure-sensitive adhesive tape according to the present invention shows favorable level difference-absorbing efficiency, in particular, to a level difference of 1 to 150 $\mu$m (preferably a level difference of 10 to 120 $\mu$m).

The heat-expandable removable acrylic pressure-sensitive adhesive tape according to the present invention can be used in various applications including automobile, mechanical parts, electric appliances, construction materials and others (e.g., for connection of parts). Since the heat expanding agent-containing pressure-sensitive adhesive layer in the heat-expandable removable acrylic pressure-sensitive adhesive tape according to the present invention expands when heated, the adhesive power to the adherend declines when the pressure-sensitive tape is heated after bonding to the adherend thus, the heat-expandable removable acrylic pressure-sensitive adhesive tape according to the present invention is used as an adhesive tape that is easily removed from the adherend. In addition, the heat-expandable removable acrylic pressure-sensitive adhesive tape according to the present invention is used as an adhesive sheet or the like in the sheet or tape shape.

[Examples]

Hereinafter, the present invention will be described with reference to Examples, but it should be understood that the present invention is not restricted at all by these Examples.

The heat-expansion rate of the heat expanding agent-containing pressure-sensitive adhesive layer was determined by the following method.

(Method of determining the heat-expansion rate of the heat expanding agent-containing pressure-sensitive adhesive layer)

Each of the heat expanding agent-containing pressure-sensitive adhesive compositions (A) to (E) described in Example and Comparative Example below was coated on the releasably-treated face of a release film (B) described below to a post-curing thickness of 100 $\mu$m and the releasably-treated surface of another release film (A) was bonded thereto, to give a heat expanding agent-containing pressuze-sensitive adhesive composition layer sheet having a heat expanding agent-containing pressure-sensitive adhesive composition layer. Ultraviolet ray (UV) having the maximum

sensitivity at 350 nm was irradiated at an illuminance of 5 $mW/cm^2$ onto the heat expanding agent-containing pressure-sensitive adhesive composition layer sheet from the both faces for 240 seconds by using a blacklight lamp (manufactured by Toshiba Corporation) for photocuring of the heat expanding agent-containing pressuze-sensitive adhesive composition layer, to form a heat expanding agent-containing ptessure-sensitive adhesive layer. The sheet was cut into pieces of a size of 30 mm in length × 30 mm in width, to give a test sample.

A test sample, the size (length, width, and thickness) of which is previously mesured, was placed on a container of an aluminum vat with a release paper placed thereon, the container was placed in a small high-temperature chamber (trade name: "ST-120," manufactured by ESPEC Corp.) with its damper closed and flow rate was set to be small wherein the temperature is set to the heat expansion temperature (maximum expansion temperature) of each heat-expandable microsphere. The test sample was removed once therefrom after 3 minutes, the release films (A) and (B) were separated, exposing the heat expanding agent-containing pressure-sensitive adhesive layer, and then, it was once again heat-treated as it was placed in the small high-temperature chamber for 10 minutes.

After the heat treatment, the size (length, width, and thickness) of the test sample heat-expanded (heat expanding agent-containing pressure-sensitive adhesive layer) was mesured, and the heat-expansion rate was calculated from the change in volume between before and after the heat treatment in accordance with the following Formula:

$$\text{Heat-expansion rate (times)} = \text{(Volume after heat treatment)}/\text{(Volume before heat treatment)}$$

The result obtained immediately after preparation of the test sample was used as the initial value (initial heat-expansion rate) and the result (heat-expansion rate) obtained after storage of the test sample in an incubator (trade name: "PH-201," manufactured by ESPEC Corp.) set to 80°C for 1 month was used as the value after storage (heat-expansion rate after storage at 80°C for 1 month),

(Preparative example of heat expanding agent-containing pressure-sensitive adhesive composition 1)

2-ethylhexyl acrylate: 90 parts by weight, acrylic acid: 10 parts by weight, a photopolymerization initiator (trade name: "Irgacure 184", manufactured by Ciba Japan): 0.05 part by weight, and a photopolymerization initiator (trade name: "Irgacure 651", manufactured by Ciba Japan): 0.05 part by weight were placed in a four-necked flask and exposed to ultraviolet ray under nitrogen atmosphere for photopolymerization, to give a partially-polymerized monomer sirup at a polymerization rate of 7%.

A heat expanding agent (heat-expandable microsphere, trade name: "Expancel microsphere 051DU40", manufactured by Expancel): 30 parts by weight, and trimethylolpropane triacrylate: 0.2 part by weight were added to the partially-polymerized monomer sirup: 100 parts by weight, and the mixture was mixed uniformly, to give a heat expanding agent-containing pressure-sensitive adhesive composition (hereinafter, referred to as "heat expanding agent-containing pressure-sensitive adhesive composition (A)").

(Preparative example of heat expanding agent-containing pressure-sensitive adhesive composition 2)

A heat expanding agent (heat-expandable microsphere, trade name: "Expancel microsphere 461DU40", manufactured by Expancel): 30 parts by weight, and trimethylolpropane triacrylate: 0.2 part by weight were added to the partially-polymerized monomer sirup obtained in preparative example 1: 100 parts by weight, and the mixture was mixed uniformly mixing, to give a heat expanding agent-containing pressure-sensitive adhesive composition (hereinafter, referred to as "heat expanding agent-containing pressure-sensitive adhesive composition (B)").

(Preparative example of heat expanding agent-containing pressure-sensitive adhesive composition 3)

A heat expanding agent (heat-expandable microsphere, trade name: "Matsumoto Microsphere F-80S", manufactured by Matsumoto Yushi-Seiyaku Co., Ltd.): 30 parts by weight, and trimethylolpropane triacrylate: 0.2 part by weight were added to the partially-polymerized monomer sirup obtained in preparative example 1: 100 parts by weight, and the mixture was mixed uniformly, to give a heat expanding agent-containing pressure-sensitive adhesive composition (hereinafter, referred to as "heat expanding agent-containing pressure-sensitive adhesive composition (C)").

(Preparative example of heat expanding agent-containing pressure-sensitive adhesive composition 4)

A heat expanding agent (heat-expandable microsphere, trade name: "Matsumoto Microsphere F-50D", manufactured by Matsumoto Yushi-Seiyaku Co., Ltd.): 30 parts by weight, and trimethylolpropane triacrylate: 0.2 part by weight were added to the partially-polymerized monomer sirup obtained in preparative example 1: 100 parts by weight, and the mixture was mixed uniformly, to give a heat expanding agent-containing pressure-sensitive adhesive composition (hereinafter, referred to as "heat expanding agent-containing pressure-sensitive adhesive composition (D)").

(Preparative example of heat expanding agent-containing pressure-sensitive adhesive composition 5)

A heat expanding agent (heat-expandable microsphere, trade name: "Matsumoto Microsphere F-50D", manufactured by Matsumoto Yushi-Seiyaku Co., Ltd.): 30 parts by weight, and trimethylolpropane triacrylate: 0.5 part by weight were added to the partially-polymerized monomer sirup obtained in preparative example 1: 100 parts by weight, and the mixture was mixed uniformly, to give a heat expanding agent-containing pressure-sensitive adhesive composition (hereinafter, referred to as "heat expanding agent-containing pressure-sensitive adhesive composition (E)").

(Preparative example of bubble-bearing microparticle-containing polymerizable composition 1)

2-Ethylhexyl acrylate: 90 parts by weight, acrylic acid: 10 parts by weight, a photopolymerization initiator (trade name: "Irgacure 184", manufactured by Ciba Japan): 0.05 part by weight, a photopolymerization initiator (trade name: "Irgacure 651", manufactured by Ciba Japan): 0.05 part by weight were placed in a four-necked flask and exposed to ultraviolet ray under nitrogen atmosphere for photopolymerization, to give a partially-polymerized monomer sirup at a polymerization rate of 7%.
1,6-hexanediol diacrylate: 0.08 part by weight, hollow glass beads (hollow glass balloon) (trade name: "CEL-STAR Z-27," manufactured by TOKAI KOGYO Co., Ltd., average diameter: 63 μm, true density: 0.26 g/cm$^3$): 9.5 parts by weight, an antioxidant (trade name: "Irganox 1010", manufactured by Ciba Japan): 0.7 part by weight, and a fluorochemical surfactant (trade name: "Surflon S-393", manufactured by AGC SEIMI CHEMICALS CO., LTD.): 0.7 part by weight were added to the partially-polymerized monomer sirup 100 parts by weight, the mixture was mixed uniformly by using a propeller mixer and then placed and agitated in a beaker, as nitrogen gas bubbles were fed from the bottom and the bubbles were mixed with a homomixer for introduction thereof to the particles, to give a bubble-bearing microparticle-containing polymerizable composition (hereinafter referred to as "bubble-bearing microparticle-containing polymerizable composition (A)").

(Use example of release film 1)

The release film used was a polyester film releasably-treated with a silicone-based release agent on one face (trade name: "MRN-38", manufactured by Mitsubishi Plastics, Inc.) (hereinafter, referred to as "release film (A)").

(Use example of release film 2)

The other release film used was a polyester film releasably-treated with a silicone-based release agent on one face (trade name: "MRF-38", manufactured by Mitsubishi Plastics, Inc.) (hereinafter, referred to as "release film (B)").

(Example 1)

The heat expanding agent-containing pressure-sensitive adhesive composition (A) was coated on the releasably-treated face of the release film (B) to a post-curing thickness of 100 μm, to give a heat expanding agent-containing pressure-sensitive adhesive composition layer sheet having a heat expanding agent-containing pressure-sensitive adhesive composition layer on the release film (B).
The bubble-bearing microparticle-containing polymerizable composition (A) was coated on the release-coated face of the release film (A) to a post-curing thickness of 800 μm, to give a bubble-bearing microparticle-containing polymerizable composition layer sheet having a bubble-bearing microparticle-containing polymerizable composition layer on the release film (A).
The bubble-bearing microparticle-containing polymerizable composition layer sheet was bonded to the heat expanding agent-containing pressure-sensitive adhesive composition layer sheet in the shape of the bubble-bearing microparticle-containing polymerizable composition layer being in contact with the heat expanding agent-containing pressure-sensitive adhesive composition layer, to give a laminate sheet.
The laminate sheet was irradiated from both faces by a blacklight lamp (manufactured by Toshiba Corporation) with

ultraviolet ray (UV) having a maximum sensitivity at 350 nm at an illuminance of 5 $mW/cm^2$ for 240 seconds, to photocure the bubble-bearing microparticle-containing polymerizable composition layer and the heat expanding agent-containing pressure-sensitive adhesive composition layer, to give an adhesive sheet having a heat expanding agent-containing pressure-sensitive adhesive layer on one face of the bubble-bearing microparticle-containing viscoelastic material.
Since the bubble-bearing microparticle-containing viscoelastic material in the adhesive sheet is tacky, the adhesive sheet can be used as a double-sided adhesive sheet. The bubble rate (bubble content) of the bubble-bearing microparticle-containing viscoelastic material was 20% (vol %). The solvent-insoluble matter content in the heat expanding agent-containing pressure-sensitive adhesive layer was 87 wt %.

(Example 2)

An adhesive sheet having a heat expanding agent-containing pressure-sensitive adhesive layer on one face of the bubble-bearing microparticle-containing viscoelastic material was prepared in a manner similar to Example 1, except that the heat expanding agent-containing pressure-sensitive adhesive composition (B) was coated on the releasably-treated face of the release film (B) to a post-curing thickness of 100 μm and a heat expanding agent-containing pressure-sensitive adhesive composition layer sheet having a heat expanding agent-containing pressure-sensitive adhesive composition layer on the release film (B) was obtained.
Since the bubble-bearing microparticle-containing viscoelastic material in the adhesive sheet is tacky, the adhesive sheet can be used as a double-sided adhesive sheet. The bubble rate (bubble content) of the bubble-bearing microparticle-containing viscoelastic material was 20% (vol %). The solvent-insoluble matter content in the heat expanding agent-containing pressure-sensitive adhesive layer was 87 wt %.

(Example 3)

An adhesive sheet having a heat expanding agent-containing pressure-sensitive adhesive layer on one face of the bubble-bearing microparticle-containing viscoelastic material was prepared in a manner similar to Example 1, except that the heat expanding agent-containing pressure-sensitive adhesive composition (C) was coated on the releasably-treated face of the release film (B) to a post-curing thickness of 100 μm and a heat expanding agent-containing pressure-sensitive adhesive composition layer sheet having a heat expanding agent-containing pressure-sensitive adhesive composition layer on the release film (B) was obtained.
Since the bubble-bearing microparticle-containing viscoelastic material in the adhesive sheet is tacky, the adhesive sheet can be used as a double-sided adhesive sheet. The bubble rate (bubble content) of the bubble-bearing microparticle-containing viscoelastic material was 20% (vol %). The solvent-insoluble matter content in the heat expanding agent-containing pressure-sensitive adhesive layer was 92 wt %.

(Comparative Example 1)

An adhesive sheet having a heat expanding agent-containing pressure-sensitive adhesive layer on one face of the bubble-bearing microparticle-containing viscoelastic material was prepared in a manner similar to Example 1, except that the heat expanding agent-containing pressure-sensitive adhesive composition (D) was coated on the releasably-treated face of the release film (B) to a post-curing thickness of 100 μm and a heat expanding agent-containing pressure-sensitive adhesive composition layer sheet having a heat expanding agent-containing pressure-sensitive adhesive composition layer on the release film (B) was obtained.
Since the bubble-bearing microparticle-containing viscoelastic material in the adhesive sheet is tacky, the adhesive sheet can be used as a double-sided adhesive sheet. The bubble rate (bubble content) of the bubble-bearing microparticle-containing viscoelastic material was 20% (vol %). The solvent-insoluble matter content in the heat expanding agent-containing pressure-sensitive adhesive layer was 86 wt %.

(Comparative Example 2)

An adhesive sheet having a heat expanding agent-containing pressure-sensitive adhesive layer on one face of the bubble-bearing microparticle-containing viscoelastic material was prepared in a manner similar to Example 1, except that the heat expanding agent-containing pressure-sensitive adhesive composition (E) was coated on the releasably-treated face of the release film (B) to a post-curing thickness of 100 μm and a heat expanding agent-containing pressure-sensitive adhesive composition layer sheet having a heat expanding agent-containing pressure-sensitive adhesive composition layer on the release film (B) was obtained.
Since the bubble-bearing microparticle-containing viscoelastic material in the adhesive sheet is tacky, the adhesive sheet can be used as a double-sided adhesive sheet. The bubble rate (bubble content) of the bubble-bearing microparticle-containing viscoelastic material was 20% (vol %). The solvent-insoluble matter content in the heat expanding agent-containing pressure-sensitive adhesive layer was 90 wt %.

(Evaluation)

Each of the adhesive sheets obtained in Examples and Comparative Examples was bonded under pressure to an adherend (polycarbonate plate), and the initial 90°peel adhesive strength (initial adhesive power) thereof and the 90°peel adhesive strength thereof after storage in an atmosphere at 80°C for 2 months as bonded to the polycarbonate adherend and after heat expansion treatment (90°peel adhesive strength after storage at 80°C for 2 months and after heat expansion treatment) were evaluated. The evaluation results are summarized in Table 1.

(Method of measuring initial 90°peel adhesive strength (initial adhesive power)

The release film (A) is removed from each of the adhesive sheets obtained in Examples and Comparative Examples; a polyethylene terephthalate film (PET film, trade name: "LUMIRROR #50",, manufactured by Toray Industries Inc.) having a thickness of 50 μm, which was corona-treated on one face, was bonded to the adhesive face, with the corona-treated face in contact with the adhesive face by using a laminator roll; and the laminate was cut to a width of 25 mm, to give an adhesive sheet carrying, as the substrate, the PET film having a thickness 50 μm corona-treated on one face as a test sample.

The adherent used was a polycarbonate plate (PC plate) (transparent, trade name: "polycarbonate plate", manufactured by Takiron Co., Ltd.) of which the surface was cleaned with alcohol and the test sample was bonded under pressure to the adherend (PC plate) in an atmosphere at 23°C under the condition of one reciprocation of a 5 kg roller (roller width: approximately 50 mm), and aged at 23°C for 30 minutes. Subsequently, the initial 90°peel adhesive strength was measured, as it was peeled off at a tensile speed of 50 mm/min in a peeling direction at an angle of 90° by using a tensile tester (trade name: "TG-1kN," manufactured by Minebea Co.,Ltd) in an atmosphere at 23°C.

(Method of measuring initial adhesive power after heat expansion treatment)

Similarly to above, a test sample (adhesive sheet (width: 25 mm) carrying a PET film as a substrate, having a thickness 50 μm, which was corona-treated on one face) was bonded under pressure to the polycarbonate plate (adherend) in an atmosphere at 23°C under the condition of one reciprocation of a 5 kg roller (roller width: approximately 50 mm) and aged at 23°C for 30 minutes. The test sample was placed with the adherend, as it was bonded to the adherend, in a small high-temperature chamber in which its damper closed and flow rate was set to be small, and heated at the heating temperature shown in Table 1 for 10 minutes for heat expansion treatment. By expansion of the heat expanding agent under heat, all test samples separated spontaneously from the adherend and thus, the adhesive power was evaluated to be 0 N/25 mm.

(Method of measuring 90°peel adhesive strength after storage at 80°C for 2 months and after heat expansion treatment)

Similarly to above, a test sample (adhesive sheet (width: 25 mm) carrying a PET film as a substrate, having a thickness 50 μm, which was corona-treated on one face) was bonded under pressure to the polycarbonate plate (adherend) in an atmosphere at 23°C under the condition of one reciprocation of a 5 kg roller (roller width: approximately 50 mm) and aged at 23°C for 30 minutes. The test sample was placed with the adherend, as it was bonded to the adherend, in an incubator (trade name: "PH-201," manufactured by ESPEC Corp.) in which the atmospheric temperature was set to 80°C.

The test sample was withdrawn from the incubator after 2 months and aged at 23°C for 30 minutes; the test sample was placed with the adherend, as it was bonded to the adherend, in small high-temperature chamber in which its damper closed and the flow rate was set to be small, and heated at the heating temperature shown in Table 1 for 10 minutes for heat expansion treatment. The adhesive power when the test sample separated spontaneously from the adherend by expansion of the heat expanding agent under heat was expressed as 0 N/25 mm. When the test sample remained bonded to the adherend after heat expansion treatment, the 90°peel adhesive strength after storage at 80°C for 2 months and after heat expansion treatment was determined in an atmosphere at 23°C by using a tensile tester (trade name: "TG-1kN", manufactured by Minebea Co.,Ltd) as the test sample was peeled off at a tensile speed of 50 mm/min in a peeling direction at an angle of 90°.

[Table 1]

(Table 1)

| | | Example 1 | Example 2 | Example 3 | Comparative Example 1 | Comparative Example 2 |
|---|---|---|---|---|---|---|
| Heating temperature (°C) | | 140 | 140 | 160 | 140 | 140 |
| Adhesive power (N/25 mm) | Initial 90°peel adhesive strength | 27 | 27 | 29 | 36 | 28 |
| | Initial adhesive power after heat expansion treatment | 0 | 0 | 0 | 0 | 0 |
| | 90° peel adhesive strength after storage at 80°C for 2 months and after heat expansion treatment | 0 | 0 | 0 | 28 | 19 |
| Heat-expansion rate (times) of heat expanding agent-containing pressure-sensitive adhesive layer | Initial heat expansion rate | | 7 9 | 6 | 6 | 7 |
| | Heat expansion rate after storage at 80°C for 1 month | 6 | 8 | 6 | 1 | 2 |

As obvious from the results above, each sample had a high initial adhesive power of 10 N/25 mm or more, but an adhesive power decreased to 0 N/25 mm (spontaneous separation) after heat treatment (heat expansion treatment). However, as for the adhesive power (90°peel adhesive strength) after storage at 80°C for 2 months and after heat expansion treatment, the test sample in Comparative Example 1 showed an adhesive power of 28 N/25 mm and that in Comparative Example 2 showed an adhesive power of 19 N/25 mm, while the test samples in all Examples showed favorable releasability (removability) at an adhesive power of 0 N/25 mm (spontaneous separation).

[Industrial Applicability]

The heat-expandable removable acrylic pressure-sensitive adhesive tape according to the present invention has high normal-state adhesive power, independently of whether the adherend has or does not have irregular surface, when bonded and permits easy separation when the bonded area is separated or disassembled by lowering adhesive power by heating. In particular, the heat-expandable removable acrylic pressure-sensitive adhesive tape according to the present invention, even after long-term storage at high temperature, as it is bonded to the adherend, can be easily removed from the adherend by subsequent heat expansion treatment. For that reason, the heat-expandable removable acrylic pressure-sensitive adhesive tape according to the present invention can be used in various applications demanding the normal-state adhesive power and easy separability described above (e.g., for bonding of parts) such as automobiles, mechanical parts, electric appliances, and construction materials.

[Reference Signs List]

1a First step in preparation step example 1
1b Second step in preparation step example 1

1c Third step in preparation step example 1
1d Fourth step in preparation step example 1
1e Heat-expandable removable acrylic pressure-sensitive

adhesive tape prepared in preparation step example 1

2a First step in preparation step example 2
2b Second step in preparation step example 2
2c Third step in preparation step example 2
2d Fourth step in preparation step example 2
2e Heat-expandable removable acrylic pressure-sensitive

adhesive tape prepared in preparation step example 2

3a First step in preparation step example 3
3b Second step in preparation step example 3
3c Third step in preparation step example 3
3d Fourth step in preparation step example 3
3e Heat-expandable removable acrylic pressure-sensitive

adhesive tape prepared in preparation step example 3

11 Bubble-bearing microparticle-containing polymerizable composition layer
12 Heat expanding agent-containing pressure-sensitive adhesive composition layer
13 Release film
14 Heat expanding agent-containing pressure-sensitive adhesive layer
15 Bubble-bearing microparticle-containing viscoelastic material (bubble-bearing microparticle-containing viscoelastic substrate)
16 Active-energy ray
17 Heat-expandable removable acrylic pressure-sensitive adhesive tape (single-sided)
18 Heat-expandable removable acrylic prossure-sensitive adhesive tape (double-sided)

## Claims

**1.** A heat-expandable removable acrylic pressure-sensitive adhesive tape or sheet, comprising at least a heat expanding agent-containing pressure-sensitive adhesive layer, and the tape or sheet having an initial 90°peel adhesive strength to a polycarbonate plate as adherend of 10 N/25 mm or more and a 90°peel adhesive strength after storage in an atmosphere at 80°C for 2 months as bonded to the polycarbonate adherend and after heat expansion treatment of less than 10 N/25 mm.

**2.** The heat-expandable removable acrylic pressure-sensitive adhesive tape or sheet according to Claim 1, wherein a heat-expansion rate of the heat expanding agent-containing pressure-sensitive adhesive layer after storage in an atmosphere at 80°C for 1 month is 3 or more.

**3.** The heat-expandable removable acrylic pressure-sensitive adhesive tape or sheet according to Claim 1 or 2, comprising a bubble-bearing microparticle-containing viscoelastic material and the heat expanding agent-containing pressure-sensitive adhesive layer at least on or above one face of the bubble-bearing microparticle-containing viscoelastic material.

[Fig. 1]

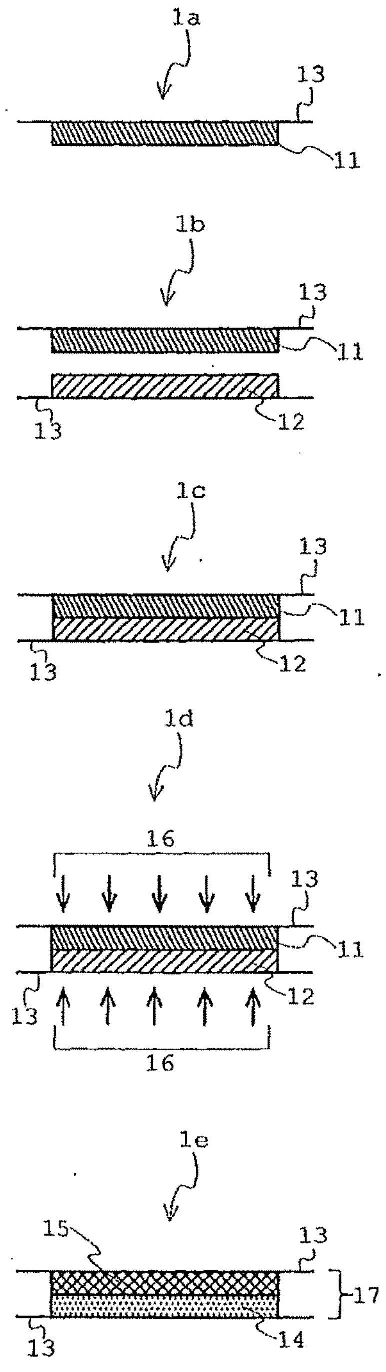
1a
13
11
1b
13
11
13
12
1c
13
11
13
12
1d
16
13
11
13
12
16
1e
15
13
17
13
14

[Fig. 2]

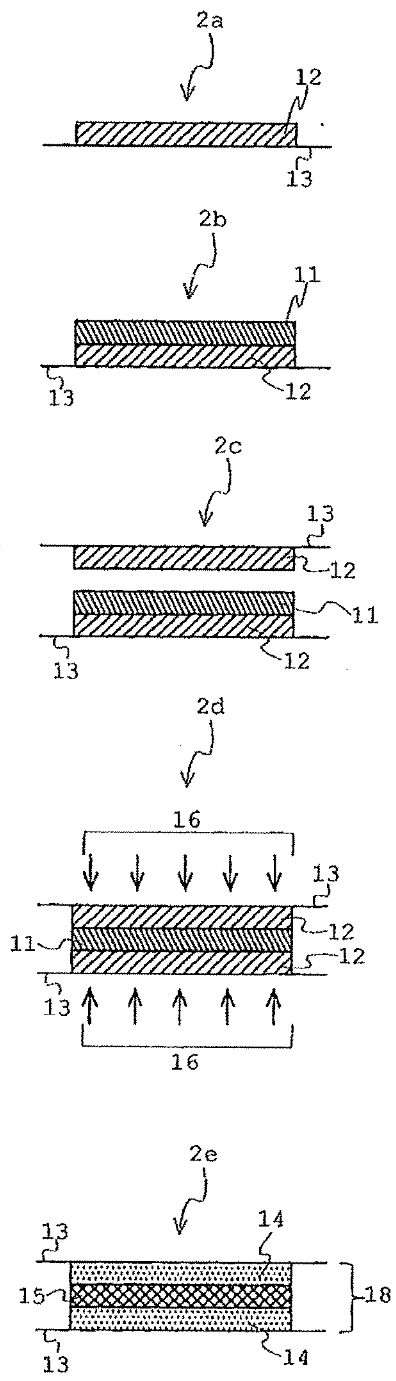
2a
12
13
2b
11
13
12
2c
13
12
11
13
12
2d
16
13
11
12
12
13
16
2e
13
14
15
18
13
14

[Fig. 3]

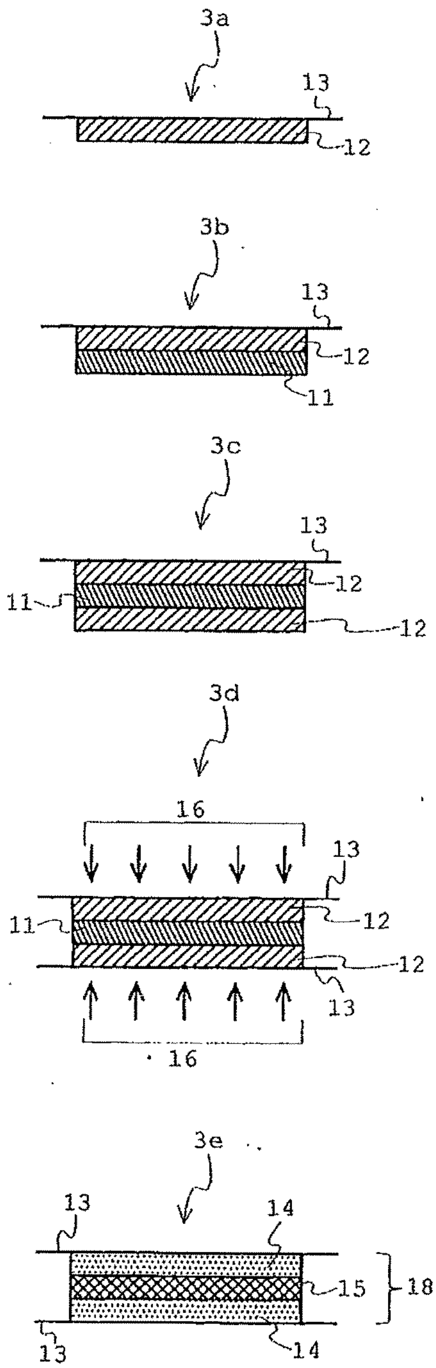
3a
13
12
3b
13
12
11
3c
13
12
11
12
3d
16
13
11
12
12
13
16
3e
13
14
15
18
13
14

**INTERNATIONAL SEARCH REPORT**

International application No.
PCT/JP2010/056756

A. CLASSIFICATION OF SUBJECT MATTER
*C09J7/02*(2006.01)i, *C09J4/02*(2006.01)i, *C09J11/00*(2006.01)i, *C09J133/00*(2006.01)i

According to International Patent Classification (IPC) or to both national classification and IPC

B. FIELDS SEARCHED

Minimum documentation searched (classification system followed by classification symbols)
C09J1/00-201/10, B01J13/02, C09K3/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-181308 A (Sekisui Chemical Co., Ltd.), 02 July 2004 (02.07.2004), claims; paragraphs [0042] to [0044], [0047] to [0054] (Family: none) | 1,2<br>3 |
| X<br>Y | JP 2007-262131 A (Fujitsu Ltd.), 11 October 2007 (11.10.2007), claims; paragraphs [0070] to [0108] & US 2007/0224380 A1 | 1,2<br>3 |
| X<br>Y | JP 2007-238789 A (Nitto Denko Corp.), 20 September 2007 (20.09.2007), claims; paragraphs [0071] to [0081] (Family: none) | 1,2<br>3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 July, 2010 (08.07.10) | 20 July, 2010 (20.07.10) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2010/056756

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-120903 A (Nitto Denko Corp.), 29 May 2008 (29.05.2008), claims & WO 2008/056788 A1 & US 2010/0075129 A & KR 10-2009-0080073 A & EP 2080793 A1 & CN 101535436 A | 3 |

Form PCT/ISA/210 (continuation of second sheet) (July 2009)

**INTERNATIONAL SEARCH REPORT**

International application No.
PCT/JP2010/056756

Claim 1 involves any heat-expansive and repeelable acrylic pressure-sensitive adhesive tapes or sheets having the property "showing an initial 90° peel bond strength, measured by using a polycarbonate board as an adherend, greater than or equal to 10 N/25 mm, and, after storing for 2 months in an atmosphere at 80°C while maintaining the state of being bonded to the polycarbonate adherend and then subjecting to a heat expansion treatment, showing a 90° peel bond strength less than 10 N/25 mm", and claim 2 involves any heat-expansive and repeelable acrylic pressure-sensitive adhesive tapes or sheets having the property "a pressure-sensitive adhesive layer containing said heat-expansion agent which shows thrice or more heat-expansion rate after storing for 1 month in an atmosphere at 80°C".

However, it appears that only a small part of the claimed articles are disclosed in the meaning within PCT Article 5 and, therefore, these claims are not supported by the disclosure in the description in the meaning within PCT Article 6.

Even though the common technical knowledge at the point of the application is taken into consideration, the scope of the substances having the properties "showing an initial 90° peel bond strength, measured by using a polycarbonate board as an adherend, greater than or equal to 10 N/25 mm, and, after storing for 2 months in an atmosphere at 80°C while maintaining the state of being bonded to the polycarbonate adherend and then subjecting to a heat expansion treatment, showing a 90° peel bond strength less than 10 N/25 mm" and "a pressure-sensitive adhesive layer containing said heat-expansion agent which shows thrice or more heat-expansion rate after storing for 1 month in an atmosphere at 80°C" as described in claim 2 could not have been specified. Thus, claims 1 and 2 do not comply with the requirement of clearness in the meaning within PCT Article 6 too.

As articles having the aforesaid properties, therefore, the search was made on those having similar expansion-initiation temperatures as marketed expansive microspheres that are specifically disclosed in paragraph [0073] and Examples in the description.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 57017030 A
- US 4223067 A
- JP 7048549 A
- JP 2001212900 A
- JP 2002088320 A
- JP 2002003800 A
- JP 2002121505 A
- JP 2004018761 A
- JP 2003013015 A